# EUROPÄISCHE PATENTSCHRIFT

(11) **EP 1 608 529 B1**
(45) Veröffentlichungstag und Bekanntmachung des Hinweises auf die Patenterteilung: **28.01.2009**
(21) Anmeldenummer: 04718613.5
(22) Anmeldetag: 09.03.2004
(51) Int. Cl.: B60N 2/48

(54) **KOPFSTÜTZENANORDNUNG FÜR EINEN KRAFTFAHRZEUGSITZ**
HEAD REST ARRANGEMENT FOR A MOTOR VEHICLE SEAT
ENSEMBLE APPUI-TETE POUR UN SIEGE DE VEHICULE AUTOMOBILE

(30) Priorität: 20.03.2003 DE 10313800
(43) Veröffentlichungstag der Anmeldung: 28.12.2005
(73) Patentinhaber: Brose Fahrzeugteile GmbH & Co. KG, Coburg, 96450 Coburg (DE)
(72) Erfinder: FISCHER, Matthias, 96317 Kronach (DE); HOFMANN, Jochen, 96257 Marktgraitz (DE)
(74) Vertreter: Baumgärtel, Gunnar
(86) Internationale Anmeldenummer: PCT/DE2004/000495
(87) Internationale Veröffentlichungsnummer: WO 2004/082985

(56) Entgegenhaltungen:
- EP-A- 1 193 114
- WO-A-03/006275
- DE-A- 19 754 311
- FR-A- 2 832 364
- US-A- 3 397 911
- US-A1- 2001 040 396
- US-B1- 6 199 947

## Beschreibung

Die Erfindung betrifft eine Kopfstützenanordnung für einen Kraftfahrzeugsitz nach dem Oberbegriff des Patentanspruchs 1.

Die US 2001/040396 A1 beschreibt eine kopfstüzenanordnung mit alle Merkmale des Oberbegriffs des Anspruchs 1.

Eine derartige Kopfstützenanordnung umfasst beispielsweise ein Lehnengestell für eine Rückenlehne des Kraftfahrzeugsitzes, das sich entlang einer Lehnenlängsrichtung erstreckt und zum Abstützen des Rückens eines auf dem entsprechenden Fahrzeugsitz sitzenden Insassen dient; eine Oberkante des Lehnengestells, die das Lehnengestell in einer aufrechten Funktionsposition nach oben begrenzt; eine in mindestens einer Gebrauchsposition oberhalb der Oberkante des Lehnengestells festlegbare Kopfstütze, deren Kopfstützenkörper eine zum Abstützen des Kopfes eines Fahrzeuginsassen vorgesehene Vorderseite aufweist; eine Einrichtung zur Verlagerung der Kopfstütze in einem Crash-Fall, um den Kopfstützenkörper bezüglich des Lehnengestells nach oben und/oder vorne in eine vorgebbare, von der Gebrauchsposition verschiedene Position hinter dem Kopf eines Fahrzeuginsassen zu bewegen und so eine verbesserte Abstützung des Kopfes und Nackenbereiches des Fahrzeuginsassen in einem Crash-Fall zu erreichen; sowie eine Verriegelungsvorrichtung, die einer Verlagerung der Kopfstütze entgegenwirkt und die in einem Crash-Fall entriegelbar ist.

Unter einer Gebrauchsposition der Kopfstütze wird dabei eine Position verstanden, die dazu dient, im Normalbetrieb eines Kraftfahrzeugs den Kopf eines Fahrzeuginsassen abzustützen. Bei einer gegenüber der Oberkante der Rückenlehne höhenverstellbaren Kopfstütze kann eine solche Gebrauchsposition beispielsweise durch den Insassen selbst eingestellt werden oder alternativ automatisch durch ein Insassenerkennungssystem eingestellt werden, das einen Fahrzeuginsassen anhand seines Gewichtes, anhand einer zuvor eingestellten Sitzlängsposition oder in sonstiger Weise identifiziert und daraufhin die Einstellung einer bestimmten Gebrauchsposition der Kopfstütze auslöst.

Unter einem Crash-Fall wird hier allgemein das plötzliche Auftreten einer (positiven oder negativen) Beschleunigung (insbesondere einer starken Fahrzeugverzögerung) verstanden, die über das hinausgeht, was durch im Straßenverkehr übliche Kraftfahrzeugnutzung zu erwarten ist. Die Schwelle, ab der Crash-bedingt eine Verlagerung der Kopfstütze aus ihrer Funktionsposition heraus ausgelöst wird, ist so zu wählen, dass jene Einwirkungen auf das Kraftfahrzeug und damit auch auf die Kraftfahrzeuginsassen erfasst werden, in denen der Kopf- und Nackenbereich der Fahrzeuginsassen besonderen Belastungen ausgesetzt sein kann. Dies lässt sich durch entsprechende Crash-Tests ermitteln.

Eine Verlagerung der Kopfstütze aus ihrer Gebrauchsposition heraus bedeutet dabei eine Änderung der Position der Kopfstütze verglichen mit der Gebrauchsposition, in die die Kopfstütze zuvor zum Abstützen des Kopfes eines Fahrzeuginsassen gebracht worden war. Diese Verlagerung wird nur dann ausgelöst, wenn, z.B. mittels eines Sensors, eine auf eine besondere Belastung des Kopf- bzw. Nackenbereiches hindeutende Fahrzeugverzögerung oder sonstige außergewöhnliche (ggf. zukünftige) Einwirkung auf das Kraftfahrzeug erfasst worden ist. Hierfür eignen sich insbesondere ein Beschleunigungssensor oder ein Annäherungssensor (Pre-Crash-Sensor). Dieser Sensor muss nicht unbedingt unmittelbar der Kopfstützenanordnung selbst zugeordnet sein, sondern es kann hierzu ein Sensor verwendet werden, der zur Detektion eines Crash-Falles und zum Auslösen einer Airbageinrichtung oder sonstiger Sicherheitsvorrichtungen ohnehin im Kraftfahrzeug vorhanden ist.

Unter der aufrechten Funktionsposition des Lehnengestells wird vorliegend eine Position des Lehnengestells verstanden, in der sich dieses - bezogen auf den in ein Kraftfahrzeug eingebauten Zustand des entsprechenden Fahrzeugsitzes - im Wesentlichen entlang der vertikalen Fahrzeugachse erstreckt. Unter der Lehnenlängsrichtung des Lehnengestells wird diejenige Richtung verstanden, entlang der sich die Wirbelsäule eines aufrecht auf dem entsprechenden Kraftfahrzeugsitz befindlichen Insassen erstreckt. Befindet sich das Lehnengestell in seiner aufrechten Funktionsposition, so verläuft die Lehnenlängsrichtung im Wesentlichen entlang der vertikalen Fahrzeugachse.

Eine Kopfstützenanordnung der eingangs genannten Art ist aus der DE 100 51 344 C1 bekannt. Bei dieser Anordnung schwenkt die Kopfstütze um eine fiktive (virtuelle) horizontale Achse nach oben und vorne in Richtung auf den Kopf eines auf dem entsprechenden Fahrzeugsitz befindlichen Insassen, um eine verbesserte Abstützung des Kopfes und Nackenbereiches des Fahrzeuginsassen sicherzustellen.

Der Erfindung liegt das Problem zugrunde, eine Kopfstützenanordnung der eingangs genannten Art weiter zu verbessern.

Dieses Problem wird durch die Schaffung einer Kopfstützenanordnung mit den Merkmalen des Patentanspruchs 1 gelöst.

Danach ist eine Vorrichtung zum Arretieren der Verriegelungseinrichtung in dem entriegelten Zustand vorgesehen, solange die Kopfstütze aus der Gebrauchsposition heraus verlagert ist.

Mit der erfindungsgemäßen Lösung wird erreicht, dass sich die Kopfstütze nach einer crash-bedingten Verlagerung aus ihrer Gebrauchsposition heraus in einfacher Weise wieder in die Gebrauchsposition zurückführen lässt, da ja die Verriegelungseinrichtung nach Verlagerung der Kopfstütze aus ihrer Gebrauchsposition heraus nach wie vor entriegelt bleibt und somit die Kopfstütze wieder in die Gebrauchsposition zurückgeführt werden kann, ohne dass die Verriegelungseinrichtung dem entgegen stünde.

Die Kopfstütze kann dann nach einer crash-bedingten Verlagerung aus ihrer Gebrauchsposition heraus ohne Weiteres wieder in ihre Gebrauchsposition zurückgeführt werden, z. B., indem die Kopfstütze durch manuelle Krafteinwirkung wieder in Richtung auf ihre Gebrauchsposition bewegt wird. Dies bedeutet, dass nach einem crash-bedingten Verlagern der Kopfstütze kein Werkstattbesuch oder sonstige aufwendige Maßnahmen erforderlich sind, um die Kopfstütze wieder in eine Position zu überführen, in der sie für den Normalbetrieb des entsprechenden Kraftfahrzeugs positioniert ist. Dies hat wiederum zur Folge, dass die Schwelle für das Auslösen der Kopfstützenverlagerung entsprechend niedriger angesetzt werden kann, da sich die Kopfstützenverlagerung anschließend ohne besonderen Aufwand und ohne besondere Kosten rückgängig machen lässt. Somit muss die Auslösung der Verlagerung der Kopfstütze nicht auf schwere Unfälle beschränkt sein, sondern kann beispielsweise auch bei einer starken Fahrzeugverzögerung infolge einer Notbremsung oder bei einer äußeren Einwirkung auf das Fahrzeug beim Überfahren eines Hindernisses, wie z. B. einer Bordsteinkante, mit hoher Geschwindigkeit ausgelöst werden.

Um im Normalbetrieb des Fahrzeugs eine zuverlässige Verriegelung der Kopfstütze in ihrer jeweiligen Gebrauchsposition sicherzustellen, ist die Verriegelungseinrichtung mittels mindestens eines ersten elastischen Elementes in Richtung auf den verriegelten Zustand vorgespannt.

Um andererseits bei einer crash-bedingten Verlagerung der Kopfstütze aus ihrer Gebrauchsposition heraus die Verriegelungseinrichtung in den entriegelten Zustand zu führen, kann mindestens ein zweites elastisches Element vorgesehen sein, mit dem die Verriegelungseinrichtung in Richtung auf den entriegelten Zustand beaufschlagt ist.

Die beiden elastischen Elemente sind derart aufeinander abzustimmen, dass bei in Gebrauchsposition befindlicher Kopfstütze die Verriegelungseinrichtung unter der Wirkung des ersten elastischen Elementes zuverlässig verriegelt ist. Dies kann beispielsweise durch eine entsprechend größere Federkraft des ersten elastischen Elementes oder auch durch den Einsatz entsprechender Hebelarme erreicht werden.

Bei der Vorverlagerung der Kopfstütze aus ihrer Gebrauchsposition heraus muss dann eine solche Einwirkung auf die Verriegelungseinrichtung erfolgen, dass das zweite elastische Element die Verriegelungseinrichtung im entriegelten Zustand halten kann, ohne vom ersten elastischen Element hieran gehindert zu werden. Verschiedene Maßnahmen hierfür werden weiter unten beschrieben werden.

Um die entriegelte Verriegelungseinrichtung in einem genau definierten Zustand zu halten, ist mindestens ein Anschlag vorgesehen, der bei entriegelter Verriegelungseinrichtung auf ein Bauteil der Verriegelungseinrichtung einwirkt, welches beispielsweise unter der Wirkung des in Verriegelungsrichtung vorgespannten ersten elastischen Elementes gegen diesen Anschlag gedrückt wird. Der Anschlag kann insbesondere durch ein Eingriffselement gebildet werden, das mit dem entsprechenden Bauteil der Verriegelungseinrichtung formschlüssig in Eingriff bringbar ist, um dieses im entriegelten Zustand in einer definierten Position zu halten.

Hierzu ist der Anschlag bei der crash-bedingten Verlagerung der Kopfstütze (durch Verschwenken) in eine Position bringbar, in der er auf das zugeordnete Bauteil der Verstelleinrichtung einwirkt. Die Einnahme dieser Position kann automatisch erfolgen, indem der Anschlag in Richtung auf die Position vorgespannt ist, in der er auf die Verriegelungseinrichtung einwirkt. Dem Anschlag ist dann ein Sicherungselement zugeordnet, das den Anschlag entgegen der Wirkung der elastischen Vorspannung solange in einer Position hält, in der er nicht auf die Verriegelungseinrichtung einwirkt, wie die Kopfstütze in ihrer Gebrauchsposition verriegelt ist.

In einer bevorzugten Weiterbildung der Erfindung, wird das Bauteil der Verriegelungseinrichtung, auf das der Anschlag im entriegelten Zustand der Verriegelungseinrichtung einwirkt, erst bei der crash-bedingten Verlagerung der Kopfstütze in eine Position gebracht, in der der Anschlag auf dieses Bauteil einwirken kann. Dies kann beispielsweise durch ein Betätigungselement erfolgen, das bei der Verlagerung der Kopfstütze gemeinsam mit dieser bewegt wird und hierbei auf die Verriegelungseinrichtung einwirkt.

Die Verriegelungseinrichtung selbst ist vorzugsweise gestellfest angeordnet, so dass sie sich bei einer Verlagerung der Kopfstütze nicht gemeinsam mit dieser bewegt.

Zur Verriegelung der Kopfstütze in ihrer Gebrauchsposition weist die Verriegelungseinrichtung gemäß einer Ausführungsform ein primäres Verriegelungselement auf, das im verriegelten Zustand der Verriegelungseinrichtung derart mit einem Halteelement der Kopfstütze zusammenwirkt, das die Kopfstütze nicht verlagerbar ist und das in einem Crash-Fall derart betätigbar ist, dass die Kopfstütze für eine Verlagerung freigegeben wird.

Bei dem primären Verriegelungselement kann es sich beispielsweise um eine schwenkbar gelagerte Sperrklinke handeln, die im verriegelten Zustand der Verriegelungseinrichtung das kopfstützenseitige Halteelement umgreift und die in einem Crash-Fall derart betätigt wird, dass sie das Haltelement freigibt und somit eine Verlagerung der Kopfstütze ermöglicht.

In einer bevorzugten Ausführungsform der Erfindung ist das primäre Verriegelungselement mittels eines elastischen Elementes in Richtung auf den entriegelten Zustand vorgespannt, in der es das Halteelement freigeben würde; es wird jedoch durch ein weiteres, sekundäres Verriegelungselement daran gehindert, die entsprechende Position einzunehmen.

Gemäß einer Weiterbildung der Erfindung kann darüber hinaus vorgesehen sein, dass das Halteelement gleichzeitig als ein Betätigungselement wirkt, das bei der Verlagerung der Kopfstütze aus ihrer Gebrauchsposition heraus derart auf einen hierfür vorgesehenen Betätigungsabschnitt des primären Verriegelungselementes einwirkt, dass ein weiteres Bauteil der Verriegelungseinrichtung, nämlich das sekundäre Verriegelungselement, in eine Position gebracht werden kann, in der der Anschlag des Eingriffselementes auf dieses Bauteil einwirken kann.

Zur Entriegelung der Verriegelungseinrichtung in einem Crash-Fall wird das vorzugsweise als Verriegelungshebel ausgebildete sekundäre Verriegelungselement derart betätigt, dass es das primäre Verriegelungselement nicht mehr in der Position hält, in der dieses das kopfstützenseitige Halteelement umgreift. Das primäre Verriegelungselement gibt dann unter der Wirkung der hierfür vorgesehenen elastischen Mittel automatisch das Halteelement frei und ermöglicht eine Verlagerung der Kopfstütze aus ihrer Gebrauchsposition heraus.

Wenn das sekundäre Verriegelungselement durch entsprechende elastische Mittel in Richtung auf einen solchen Zustand vorgespannt ist, in dem es auf das primäre Verriegelungselement einwirkt, um die Verriegelungseinrichtung im verriegelten Zustand zu halten, dann muss die in einem Crash-Fall (sensorgesteuert) auszulösende Betätigungseinrichtung so ausgebildet sein, dass sie das sekundäre Verriegelungselement entgegen der Wirkung der elastischen Vorspannung außer Eingriff mit dem primären Verriegelungselement bringen kann. Grundsätzlich sind hierfür beliebige, insbesondere durch einen Beschleunigungssensor auslösbare, elektrische oder mechanische Mittel geeignet, die eine hinreichend große Betätigungskraft aufbringen können, wobei zur Erzeugung großer Betätigungskräfte aufgrund eines Sensorsignales vor allem Elektromagnete geeignet sind. Ein derartiger Elektromagnet kann beispielsweise über eine Zug- oder eine Schubstange mit der Verriegelungseinrichtung, insbesondere deren sekundärem Verriegelungselement, in Wirkverbindung stehen, um die Verriegelungseinrichtung in einem Crash-Fall zu entriegeln.

Mit Vorteil wird die Verriegelungseinrichtung bei einem abschließendem Rückführen der verlagerten Kopfstütze in ihre Gebrauchsposition automatisch wieder verriegelt, so dass die Kopfstütze für die weitere Nutzung wieder in ihrer Gebrauchsposition verriegelt ist. Dies kann dadurch erreicht werden, dass beim Zurückführen der Kopfstütze aus ihrer verlagerten Position in die Gebrauchsposition das Sicherungselement derart auf das der Verriegelungseinrichtung zugeordnete Eingriffselement einwirkt, dass dieses die Verriegelungseinrichtung nicht mehr in dem entriegelten Zustand hält. Die hierfür vorgesehene Bewegung des Eingriffselementes unter der Wirkung des kopfstützenseitigen Sicherungselementes wird dadurch ermöglicht, dass das der Verriegelungseinrichtung, insbesondere deren primärem Verriegelungselement, zugeordnete Betätigungselement auf die Verriegelungseinrichtung einwirkt und hierdurch das Eingriffselement entblockiert, so dass dieses aus seiner Eingriffslage heraus bewegt werden kann, in der es die Verriegelungseinrichtung im entriegelten Zustand hält.

Die Überführung der Verriegelungseinrichtung in den verriegelten Zustand erfolgt dann schließlich unter der Wirkung desjenigen elastischen Elementes, mit dem die Verriegelungseinrichtung in Richtung auf den verriegelten Zustand vorgespannt ist.

Zur Freisetzung der Energie, die für die Verlagerung der Kopfstütze in einem Crash-Fall notwendig ist, kann ein Energiespeicher vorgesehen sein, der beispielsweise chemische oder elastische Energie zur Verfügung stellt. In einer bevorzugten Ausführungsform wird der Energiespeicher durch ein elastisches Mittel, insbesondere in Form eines mindestens eines Federelementes, gebildet, das derart gegen die Kopfstütze vorgespannt ist, dass es die Tendenz hat, die Kopfstütze zu verlagern, wobei die Verriegelungseinrichtung der Verlagerung der Kopfstütze solange entgegen wirkt, wie die Verriegelungseinrichtung nicht crash-bedingt entriegelt worden ist.

Weitere Merkmale und Vorteile der Erfindung werden bei der nachfolgenden Beschreibung eines Ausführungsbeispieles anhand der Figuren deutlich werden.

Es zeigen:
- Fig. 1a: eine Explosionsdarstellung einer Kopfstützenanordnung mit einer bezüglich eines Lehnengestells höhenverstellbaren Kopfstütze, die zusätzlich in einem Crash-Fall aus ihrer jeweiligen Gebrauchsposition heraus verlagerbar ist;
- Fig. 1b: die Kopfstützenanordnung aus Figur 1a in perspektivischer Darstellung;
- Fig. 1c: eine Seitenansicht der Kopfstützenanordnung aus den Figuren 1a und 1 b;
- Fig. 2a: die Kopfstützenanordnung aus Figur 1a nach der Verlagerung der Kopfstütze;
- Fig. 2b: eine perspektivische Darstellung der Kopfstützenanordnung aus Figur 1a nach der Verlagerung der Kopfstütze;
- Fig. 2c: eine Seitenansicht der Kopfstützenanordnung aus Figur 1a nach der Verlagerung der Kopfstütze;
- Fig. 3a: eine Prinzipdarstellung einer Einrichtung zum Verriegeln der Kopfstütze aus Figur 1a in ihrer Gebrauchsposition vor der Verlagerung;
- Fig. 3b: die Verriegelungseinrichtung nach einer Entriegelung;
- Fig. 4: eine schematische Darstellung der Verlagerung der Kopfstütze aus den Figuren 1a bis 2c;
- Fig. 5a: eine Weiterbildung der Verriegelungseinrichtung aus den Figuren 3a und 3b, die bei Verlagerung der Kopfstütze in ihrem entriegelten Zustand arretierbar ist;
- Fig. 5b: die Verriegelungseinrichtung aus Figur 5a im entriegelten Zustand bei noch in Gebrauchsposition befindlicher Kopfstütze;
- Fig. 5c: die Verriegelungseinrichtung aus Figur 5a im entriegelten Zustand bei Verlagerung der Kopfstütze;
- Fig. 5d: die Verriegelungseinrichtung aus Figur 5a im entriegelten Zustand in einem fortgeschrittenen Stadium der Verlagerung der Kopfstütze;
- Fig. 5e: die Verriegelungseinrichtung aus Figur 5a beim Rückführen der Kopfstütze in ihre Gebrauchsposition nach einer Verlagerung;
- Fig. 5f: die Verriegelungseinrichtung aus Figur 5a in einem fortgeschrittenen Stadium beim Rückführen der Kopfstütze in ihre Gebrauchsposition;
- Fig. 6: eine Abwandlung der Verriegelungseinrichtung aus Figur 5a hinsichtlich der Mittel zum Entriegeln der Verriegelungseinrichtung.

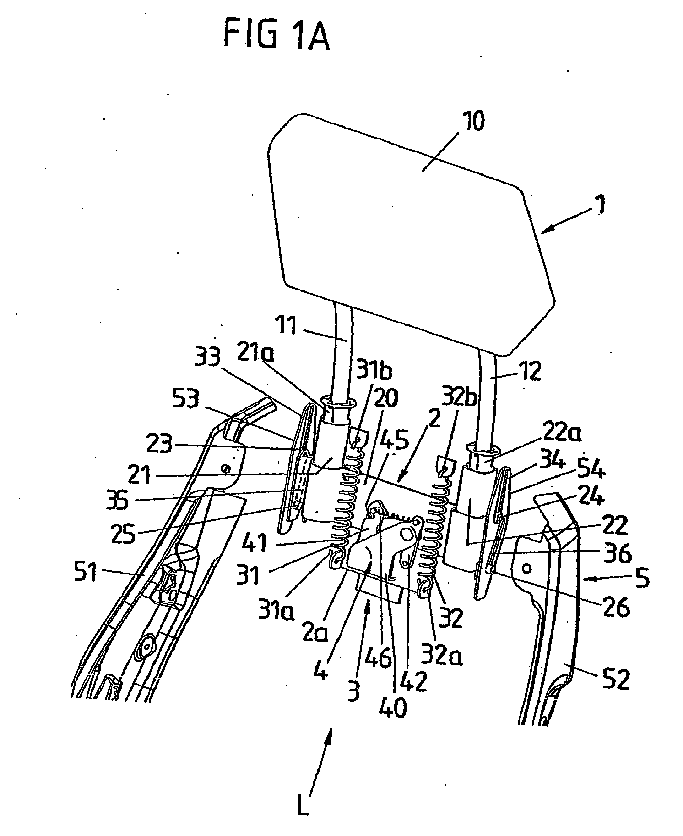

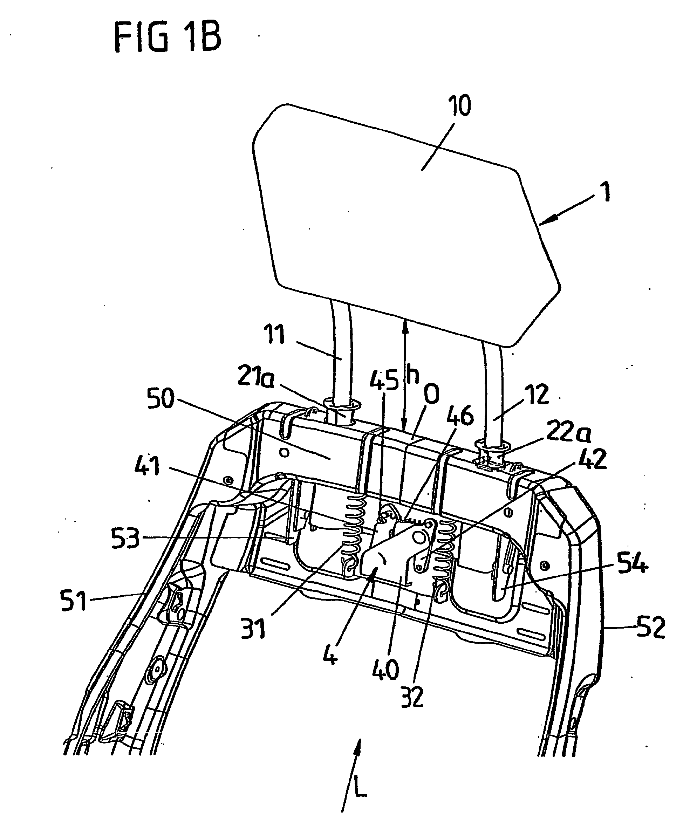

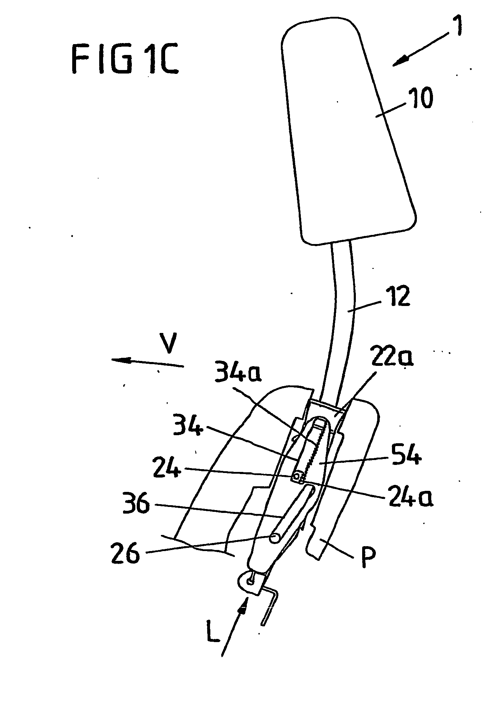

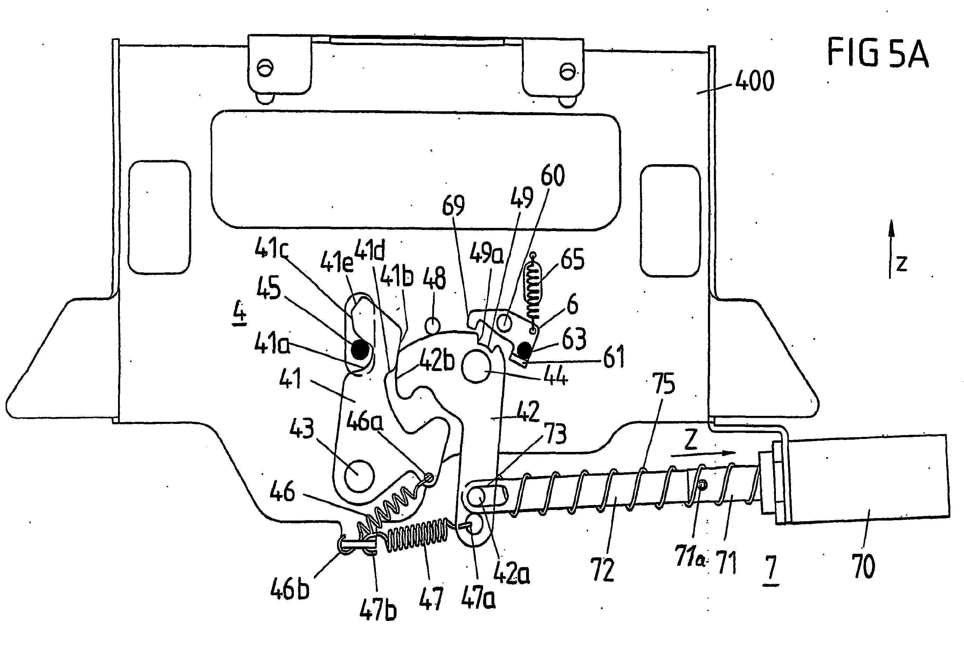

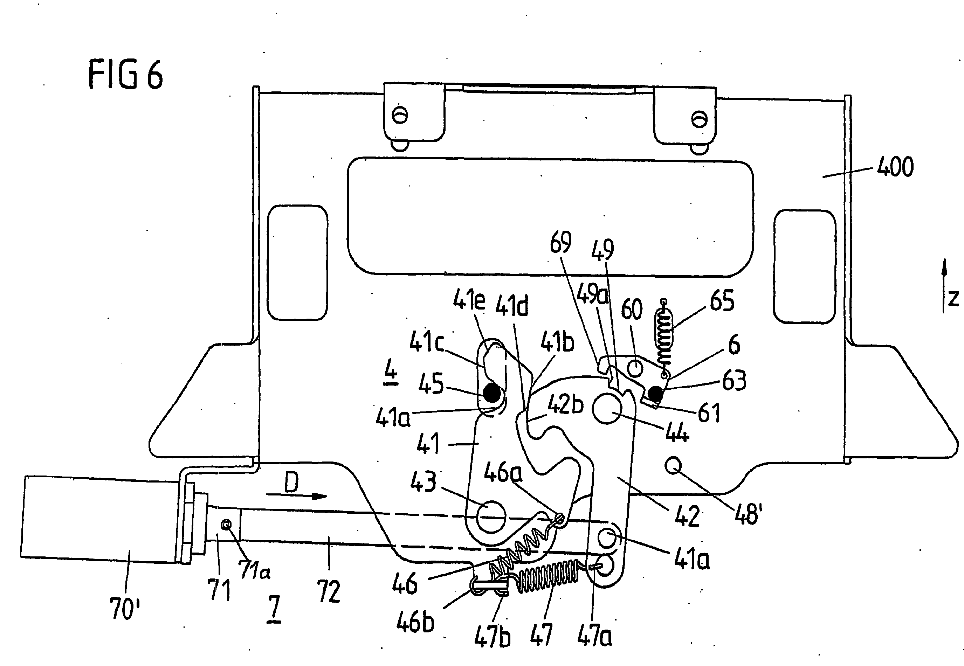

Im Folgenden wird anhand der Figuren 1 bis 4 zunächst eine Einrichtung zur Verlagerung einer Kopfstütze aus ihrer Gebrauchsposition heraus in einem Crash-Fall beschrieben, und zwar durch Verschwenken der Kopfstütze. Im Anschluss daran werden anhand der Figuren 5a bis 5f und 6 zwei Ausführungsformen einer Verriegelungseinrichtung für eine derartige Kopfstützenanordnung beschrieben, die nach dem Verlagern der Kopfstütze im entriegelten Zustand arretierbar ist.

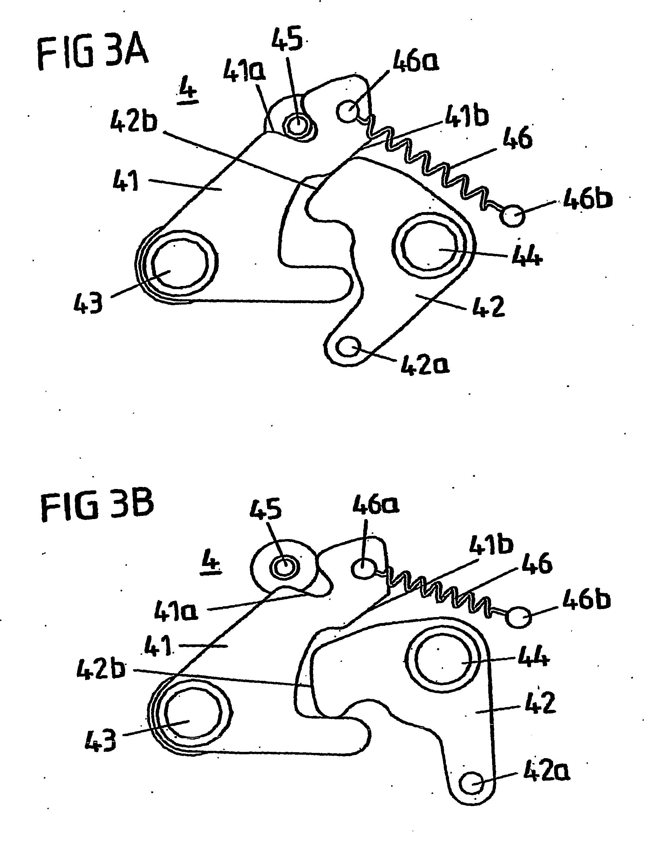

Die Figuren 1a bis 1c zeigen zusammen mit Figur 3a eine Kopfstützenanordnung für einen Kraftfahrzeugsitz mit einer Kopfstützenbaugruppe 1 (vorliegend auch einfach Kopfstütze genannt), die einen an zwei Führungsstangen 11, 12 in Form von Führungsholmen befestigten Kopfstützenkörper 10 aufweist. Die beiden Führungsstangen 11, 12 sind längsverschieblich aufgenommen in Führungshülsen 21, 22, die an einer Grundplatte 20 eines Kopfstützenträgers 2 vorgesehen sind und aus deren oberen Endabschnitten 21a, 22a die Führungsstangen 11, 12 mit dem Kopfstützenkörper 10 herausragen.

Die Kopfstützenbaugruppe 1 ist über den Kopfstützenträger 2 an einem Lehnengestell 5 eines Kraftfahrzeugsitzes festgelegt, das zwei Lehnenseitenteile 51, 52 sowie einen Lehnenkopf 50 umfasst. Der Lehnenkopf 50 bildet den oberen Endabschnitt des Lehnengestells 5 und definiert dessen Oberkante O. Das Lehnengestell 5 erstreckt sich entlang einer Lehnenlängsrichtung L, die im Wesentlichen der Erstreckungsrichtung der Wirbelsäule einer auf dem entsprechenden Fahrzeugsitz befindlichen, sich an der Rückenlehne anlehnenden Person entspricht. Bei einem in ein Kraftfahrzeug eingebauten Fahrzeugsitz, dessen Rückenlehne in eine aufrechte Stellung gebracht ist, verläuft die Lehnenlängsrichtung L im Wesentlichen entlang der vertikalen Fahrzeugachse (z-Achse).

Durch Verschiebung der Führungsstangen 11, 12 in den zugeordneten Führungshülsen 21, 22, die sich entlang der Lehnenlängsrichtung L erstrecken, ist die Höhe h des Kopfstützenkörpers 10 bezüglich der Oberkante O des Lehnengestells 5, d.h., der Abstand des Kopfstützenkörpers 10 von der Oberkante O des Lehnengestells 5 einstellbar, um eine an den jeweiligen Insassen angepasste Gebrauchsposition der Kopfstütze einzustellen. Hierfür sind unterschiedliche manuelle bzw. fremdkraftbetätigte (elektrische) Antriebe bekannt, die auf der Grundplatte 20 oder an der Kopfstützenbaugruppe 1 angeordnet sein können. Auf die Darstellung eines Antriebs zur Einstellung der Höhe h des Kopfstützenkörpers 10 wurde hier verzichtet, da die vorliegende Erfindung unabhängig von der Art des zur Einstellung der Höhe h des Kopfstützenkörpers 10 verwendeten Antriebs ist.

Zusätzlich zu einer Einrichtung zur Einstellung der Höhe des Kopfstützenkörpers 10 ist eine Einrichtung zum Verlagern des Kopfstützenkörpers 10 in einem Crash-Fall vorgesehen, mittels der eine Schwenkbewegung des Kopfstützenkörpers 10 erzeugbar ist, durch die dieser in einer Richtung nach oben entlang der Lehnenlängsachse L sowie nach vorne in einer Richtung V senkrecht zur Lehnenlängsachse L bewegbar ist. Durch eine solche Bewegung soll in einem Crash-Fall der Kopfstützenkörper 10 nach vorne gegen den Kopf und Nacken des auf dem entsprechenden Fahrzeugsitz befindlichen Fahrzeuginsassen geführt werden und gleichzeitig verhindert werden, dass der Fahrzeuginsasse mit seinem Kopf in den Bereich zwischen der Oberkante des Kopfstützenkörpers 10 und dem Dachhimmel gerät.

Die Einrichtung zum Verschwenken des Kopfstützenkörpers 10 greift an der Grundplatte 20 des zu der Kopfstützenbaugruppe 1 gehörenden Kopfstützenträgers 2 an und umfasst zwei parallel zueinander angeordnete, in Lehnenlängsrichtung L erstreckte Zugfedern 31, 32, die jeweils mit ihrem unteren Ende 31a bzw. 32a an einem Fortsatz 2a des Kopfstützenträgers 2 und mit ihren oberen Enden 31 b bzw. 32b am Lehnenkopf 50 eingehängt sind. Die beiden Federelemente 31, 32 stehen derart unter Vorspannung, dass sie die Tendenz haben, die Grundplatte 20 des Kopfstützenträgers 2 und damit die Kopfstütze 1 insgesamt entlang der Lehnenlängsrichtung L anzuheben.

Eine Bewegung der Kopfstütze 1 zusammen mit dem Kopfstützenträger 2 unter der Wirkung der vorgespannten Federelemente 31, 32 wird jedoch durch eine in Figur 3a in einer Prinzipdarstellung gezeigte Verriegelungseinrichtung 4 verhindert, die an einem lehnengestellfesten Träger 40 angeordnet ist. Diese Verriegelungseinrichtung 4 umfasst ein um eine Achse 43 schwenkbar gelagertes primäres Verriegelungselement 41 in Form einer schwenkbar gelagerten Sperrklinke mit einer Verriegelungsklaue 41a, die im verriegelten Zustand der Verriegelungseinrichtung 4 ein Halteelement in Form eines von der Grundplatte 20 des Kopfstützenträgers 2 abstehenden Fortsatzes (Verriegelungsbolzen 45) umgreift. Hierdurch wird eine Bewegung der Grundplatte 20 gegenüber dem lehnengestellfesten Träger 40 der Verriegelungseinrichtung 4 und somit eine Bewegung der Kopfstützenbaugruppe 1 insgesamt gegenüber dem Lehnengestell 5 verhindert. Das primäre Verriegelungselement 41 ist mittels eines elastischen Elementes in Form einer Zugfeder 46, die mit einem Ende 46a an dem Verriegelungselement 41 und mit dem anderen Ende 46b an dem Träger 40 angreift, derart elastisch vorgespannt, dass es die Tendenz hat, den Verriegelungsbolzen 45 freizugeben. Dem wirkt jedoch ein um eine zweite Achse 44 schwenkbar gelagertes sekundäres Verriegelungselement 42 in Form eines Verriegelungshebels entgegen, das mit einer Anschlagsfläche 42b gegen eine zugeordnete Anschlagsfläche 41 b des primären Verriegelungselementes 41 drückt und daher eine Bewegung des primären Verriegelungselementes 41 unter der Wirkung des elastischen Elementes 46 verhindert.

Das sekundäre Verriegelungselement 42 weist eine Angriffsstelle 42a für eine Betätigungseinrichtung auf, die in einem Crash-Fall ausgelöst wird und eine Schwenkbewegung des sekundären Verriegelungselementes 42 um seine Schwenkachse 44 bewirkt. Hierzu kann beispielsweise ein sensorgesteuerter Aktor in Form eines Elektromagneten (Hubmagneten), eines Elektromotors oder einer pyrotechnischen Ladung dienen, oder ein mit einem Betätigungshebel gekoppeltes Massenpendel oder ein Koppelmechanismus, der das sekundäre Verriegelungselement 42 an einen Gurtstraffer koppelt.

Unabhängig von dem verwendeten physikalischen und technischen Prinzip zum Betätigen und Verschwenken des sekundären Verriegelungselementes 42 ist von Bedeutung, dass die entsprechende Bewegung des sekundären Verriegelungselementes 42 in einem Crash-Fall zuverlässig ausgelöst wird und dass das sekundäre Verriegelungselement 42 ansonsten in einer Position gehalten ist, in der es eine Bewegung des primären Verriegelungselementes 41 verhindert. Zur Erzielung der letztgenannten Funktion kann das sekundäre Verriegelungselement 42 beispielsweise unter Verwendung eines weiteren, in den Figuren nicht dargestellten elastischen Elementes in der in Figur 3a dargestellten Position fixiert werden, in der es eine Bewegung des primären Verriegelungselementes 41 um seine Schwenkachse 43 verhindert. Die von dem entsprechend elastischen Element aufgebrachte Kraft zur Fixierung des sekundären Verriegelungselementes 42 muss von der Kraft überwindbar sein, die beim Betätigen des sekundären Verriegelungselementes 42 durch einen Aktor, Gurtstraffer oder dergleichen aufgebracht wird.

Zur Erzielung einer definierten Schwenkbewegung des Kopfstützenkörpers 10 nach dem Entriegeln der Verriegelungseinrichtung 4 unter Wirkung der Federelemente 31, 32 ist die Grundplatte 20 des Kopfstützenträgers 2 mittels an den abgewinkelten Stirnseiten der Grundplatte 20 vorgesehenen Führungselementen 23, 24 sowie 25, 26 in zugeordneten Längsführungen (Kulissenführungen) 33, 34 bzw. 35, 36 gestellfester Führungsteile 53, 54 geführt.

Die an je einer Längsseite 51, 52 des Lehnengestells 5 angeordneten Führungsteile 53, 54 weisen dabei jeweils zwei in den Längsrichtungen L übereinander angeordnete Führungskulissen 33 und 35 bzw. 34 und 36 auf. Dabei sind die auf gleicher Höhe entlang der Lehnenlängsrichtung L angeordneten Führungskulissen 33, 34 bzw. 35, 36 des einen Führungsteils 53 und anderen Führungsteils 54 jeweils identisch ausgebildet.

Die in Lehnenlängsrichtung oberen Führungskulissen 33, 34 verlaufen im Wesentlichen parallel zur Lehnenlängsrichtung L und sind nur leicht bezüglich dieser geneigt. Sie erstrecken sich somit auch im Wesentlichen parallel zu den Führungsstangen 11, 12 im Bereich ihres Austritts aus den oberen Endabschnitten 21 a, 22a der Führungshülsen 21, 22. Die unteren Führungskulissen 35, 36 sind demgegenüber stärker gegenüber der Lehnenlängsrichtung L geneigt, und zwar jeweils von vorne unten nach hinten oben.

Durch das Zusammenwirken der in Lehnenlängsrichtung L übereinander angeordneten Führungskulissen 33, 35 bzw. 34, 36 an beiden Längsseiten des Lehnengestells 5 wird die gewünschte Schwenkbewegung des Kopfstützenkörpers 1 erreicht, wie nachfolgend näher erläutert werden wird.

In einem Crash-Fall, insbesondere bei einem Heck-Crash wird die der Grundplatte 2 zugeordnete Verriegelungseinrichtung 4 durch Einwirkung auf das sekundäre Verriegelungselement 42 mittels eines der voranstehend beschriebenen Mechanismen entriegelt, wie in Fig. 3b dargestellt. Der besagte Mechanismus wirkt auf die Angriffsstelle 42a des sekundären Verriegelungselementes 42 ein und bewirkt so eine Schwenkbewegung des sekundären Verriegelungselementes 42 um seine Schwenkachse 44, durch die die Anschlagsfläche 42b des sekundären Verriegelungselementes 42 von dem primären Verriegelungselement 41 weg bewegt wird, so dass dieses unter der Wirkung des zugeordneten elastischen Elementes 46 um seine Achse 43 verschwenken kann. Hierbei gibt das primäre Verriegelungselement 41 den Verriegelungsolzen 45 frei, so dass einer Bewegung der Grundplatte 20 des Kopfstützenträgers 2 unter der Wirkung der an der Grundplatte 20 angreifenden Federelemente 31, 32 nichts mehr entgegensteht.

Die Bewegung des primären Verriegelungselementes 41 um seine Achse 43 wird zudem durch einen Anschlag des sekundären Verriegelungselementes 42 ausgelöst bzw. verstärkt, der auf einen zugeordneten Anschlag des primären Verriegelungselementes 41 einwirkt.

Unter der Wirkung der in den vorgespannten Federelementen 31, 32 als Energiespeicher gespeicherten elastischen Energie bewegt sich nun die Grundplatte 20 des Kopfstützenträgers 2 nach oben. Dabei wird aufgrund der Führung der Grundplatte 20 mittels Führungselementen 23, 24; 25, 26 in zugeordneten Führungskulissen 33, 34 bzw. 35, 36 eine Schwenkbewegung vollzogen, die einer kombinierten Bewegung in Lehnenlängsrichtung L nach oben sowie in einer Richtung V senkrecht hierzu nach vorne entspricht. Diese Schwenkbewegung wird unmittelbar auf den über die Führungsstangen 11, 12 am Kopfstützenträger 2 angeordneten Kopfstützenkörper 10 übertragen.

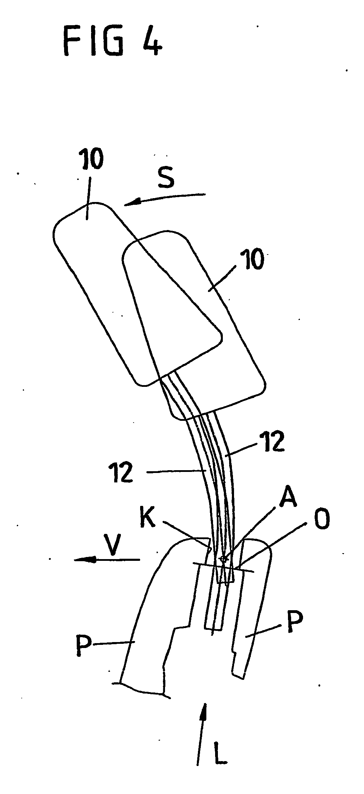

Die entsprechende Schwenkbewegung S ist anhand Figur 4 erkennbar, in der der Kopfstützenkörper 10 zum einen in seine Ausgangsposition vor Ausführung der Schwenkbewegung und zum anderen in seiner Endposition nach Ausführung der Schwenkbewegung S dargestellt ist.

Es ist deutlich erkennbar, dass die Schwenkbewegung S eine Verlagerung des Kopfstützenkörpers 10 einerseits der entlang der Lehnenlängsrichtung L nach oben und andererseits senkrecht hierzu in einer Richtung V nach vorne bewirkt, so dass sich der Kopfstützenkörper 10 hin zu dem Kopf eines auf dem entsprechenden Kraftfahrzeugsitz befindlichen Fahrzeuginsassen bewegt und dabei den Kopf insbesondere derart übergreift, dass dieser nicht über die Oberkante des Kopfstützenkörpers 10 gelangen kann.

Anhand Figur 4 wird ferner deutlich, dass die Schwenkbewegung S einer,Bewegung um eine virtuelle Achse A entspricht, die sich oberhalb der Oberkante O des Lehnenkopfes 50 (vgl. Figur 1a und 1b) horizontal, d. h. senkrecht zur Lehnenlängsrichtung L, erstreckt und dabei die Führungsstangen 11, 12 der Kopfstützenbaugruppe schneidet. Das am Lehnengestellt vorgesehene Lehnenpolster P weist oberhalb der Oberkante O des Lehnenkopfes eine kanalförmige Ausnehmung K von solcher Größe auf, dass die Schwenkbewegung der Führungsstangen 11, 12 um die Schwenkachse A durch das Polster P nicht behindert wird.

Figur 4 zeigt eine besonders vorteilhafte Lage der Schwenkachse A oberhalb der Oberkante O des Lehnenkopfes, in der diese die Führungsstangen 11, 12 der Kopfstütze 1 schneidet und somit in der durch die Führungsstangen 11, 12 aufgespannten Ebene bzw. unmittelbar oberhalb der Oberkante O des Lehnenkopfes verläuft. D. h., eine sich in Lehnenlängsrichtung L erstreckende, die Schwenkachse A schneidende Gerade würde auch die Oberkante O des Lehnenkopfes schneiden.

Die Schwenkachse kann aber grundsätzlich auch an anderer Stelle oberhalb der Oberkante O des Lehnenkopfes angeordnet sein, beispielsweise senkrecht zur Lehnenlängsrichtung L von dem Lehnengestell beabstandet vor oder hinter dem Lehnengestell. Entscheidend ist, dass die Schwenkachse A in Lehnenlängsrichtung L auf einer Höhe liegt, die mindestens der Höhe der Oberkante O entspricht.

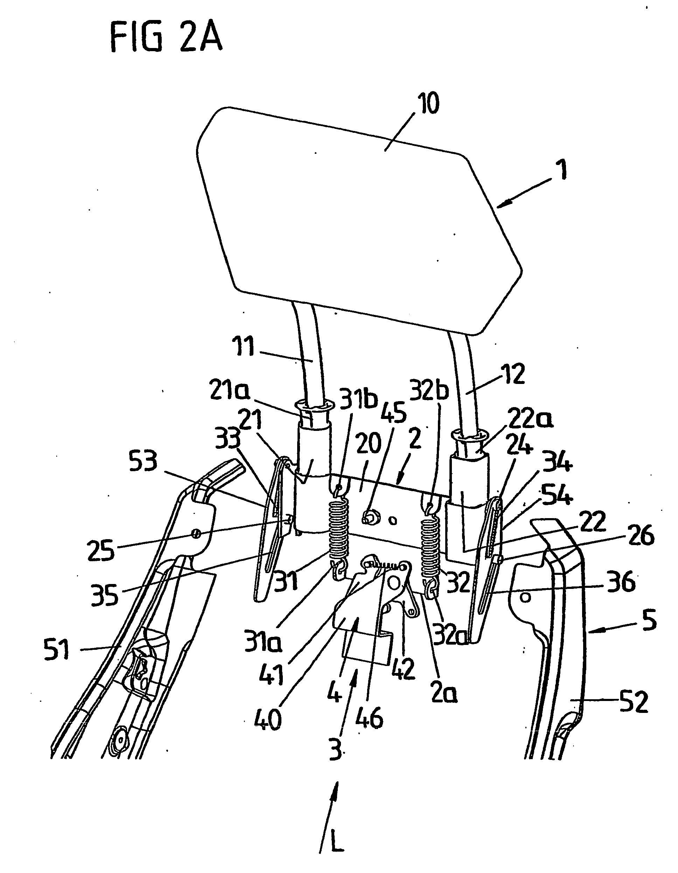

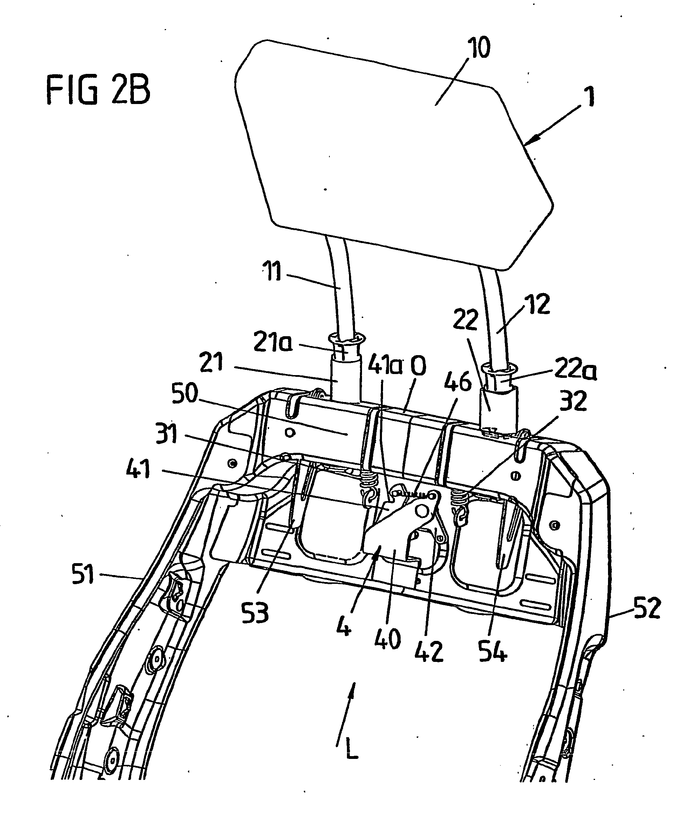

Die Figuren 2a bis 2c zeigen die Kopfstützenanordnung aus den Figuren 1a bis 1c nach Abschluss der Schwenkbewegung der Kopfstütze 1. Anhand der Figuren wird deutlich, dass die an der Kopfstützenbaugruppe 1, genauer an der Grundplatte 20 des Kopfstützenträgers 2 vorgesehenen Führungselemente 23, 24, 25, 26 in der jeweils zugeordneten Führungskulisse 33, 34, 35, 36 von einem unteren Ende (unterer Anschlag) zu einem oberen Ende (oberer Anschlag) verschoben wurden, und zwar unter der Wirkung der an der Grundplatte 20 angreifenden Federelemente 31, 32. Dies hat zu der Schwenkbewegung der Kopfstütze 1 in die in den Figuren 2a bis 2c dargestellte Endposition geführt.

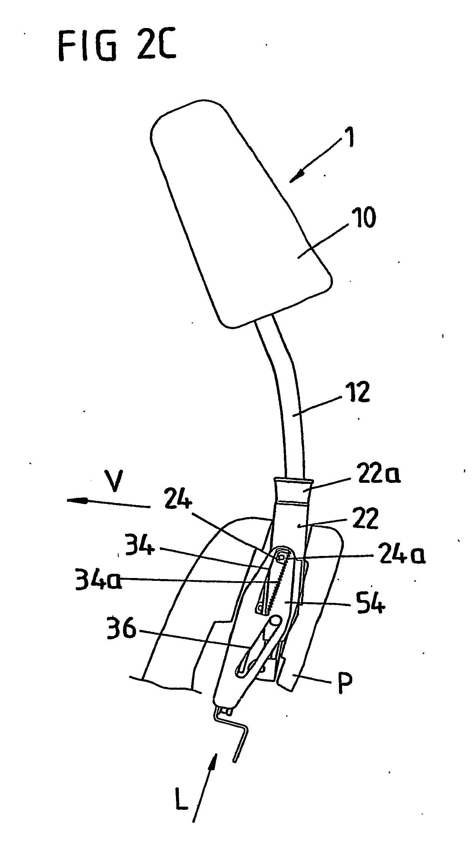

Insbesondere anhand der Figuren 1c und 2c wird deutlich, dass sich die jeweilige obere Führungskulisse 33, 34 im zugeordneten Führungsteil 53, 54 im Wesentlichen entlang der Lehnenlängsrichtung L erstreckt, während die jeweilige untere Führungskulisse 36, 37 zur Lehnenlängsrichtung L stark geneigt ist. Dies erzeugt die gewünschte Schwenkbewegung um eine Achse A (vergl. Figur 4) oberhalb der Oberkante O des Lehnenkopfes.

Ferner wird anhand der Figur 1c und 2c am Beispiel einer der beiden oberen Führungskulissen 33, 34 deutlich, dass die Führungskulisse 34 an einer Längsseite mit einer Längsverzahnung 34a versehen sein kann, der eine entsprechende Verzahnung 24a des in der Kulisse 34 geführten Führungselementes 24 zuzuordnen wäre. Die Verzahnungen 24a, 34a sind derart als Schrägverzahnungen ausgebildet, dass sie zwar eine Bewegung des Führungselementes 24a in Lehnenlängsrichtung L nach oben zulassen, die zu einem Verschwenken der Kopfstütze 1 führt, jedoch nicht eine Bewegung entlang der entgegengesetzten Richtung nach unten. Hierdurch ist die Kopfstützenbaugruppe insgesamt und somit insbesondere der Kopfstützenkörper 10 nach Ausführung der Schwenkbewegung in seiner Endposition fixiert. Dadurch wird verhindert, dass bei einem Aufprall des Kopfes des zu schützenden Fahrzeuginsassen auf den Kopfstützenkörper 10 dieser ohne weiteres wieder in seine ursprüngliche Position zurückbewegt werden kann. Die ineinander greifenden Verzahnungsbereiche 24a, 34a dienen somit als Rückstellsperre, mit der eine sofortige Rückstellbewegung der Kopfstütze aus der durch Verschwenken erzeugten Endposition heraus vermieden wird.

Allerdings ist eine Rückstellbewegung dann möglich, wenn die beiden Verzahnungen 24a, 34a außer Eingriff gebracht werden, zum Beispiel durch Ausübung einer Zug- oder Druckkraft auf den Kopfstützenkörper 10 in einer Richtung V senkrecht zur Lehnenlängsrichtung L nach vorne. Stehen die Verzahnungen 24a, 34a außer Eingriff, so kann das Führungselement 24 in der Führungskulisse 34 wieder nach unten bewegt werden und die gesamte Kopfstützenbaugruppe bewegt sich in ihre Ausgangsposition (Gebrauchsposition), wenn der Zustand der Verriegelungseinrichtung 4 dies zulässt, wobei die Federelemente 31, 32 (vgl. Figuren 1a und 1b) wieder gespannt werden. Sie speichern also wieder elastische Energie, um die Kopfstütze 1 im Bedarfsfall erneut verschwenken zu können. Es handelt sich hier also um eine reversible Sicherheitsvorrichtung.

Für eine Rückführung der Kopfstütze aus ihrer durch Verschwenken verlagerten Position in ihre Gebrauchsposition ist vorgesehen, die Verriegelungseinrichtung in ihrem entriegelten Zustand zu arretieren, solange sich die Kopfstütze außerhalb ihrer Gebrauchsposition befindet, also crash-bedingt verlagert (verschwenkt) ist. Zwei Ausführungsbeispiele eines hierfür geeigneten Mechanismus werden nachfolgend anhand der Figuren 5a bis 5f sowie der Figur 6 beschrieben werden.

Figur 5a zeigt eine Weiterbildung der in Figur 3a nur in ihrem prinzipiellen Aufbau dargestellten Verriegelungseinrichtung im verriegelten Zustand für eine in einer Gebrauchsposition befindlich Kopfstütze.

Die in Figur 5a dargestellte Verriegelungseinrichtung 4 ist an einer lehnenfesten Trägerplatte 400 angeordnet und umfasst ein primäres Verriegelungselement 41 in Form einer um eine Achse 43 verschwenkbaren Sperrklinke sowie ein sekundäres Verriegelungselement 42 in Form eines um eine weitere Achse 44 verschwenkbaren Verriegelungshebels.

Das primäre Verriegelungselement 41 weist eine durch eine Ausnehmung gebildete Verriegelungsklaue 41 a auf, die im verriegelten Zustand der Verriegelungseinrichtung 4 ein Halteelement in Form eines von der Grundplatte 20 des Kopfstützenträgers 2 (vergleiche Figur 1a) abstehenden Fortsatzes (Verriegelungsbolzen 45) umgreift. Hierdurch wird eine Bewegung der Grundplatte 20 gegenüber dem lehnengestellfesten Träger 400 der Verriegelungseinrichtung 4 und somit eine Bewegung der Kopfstützenbaugruppe 1 insgesamt gegenüber dem Lehnengestell 5 verhindert.

Das primäre Verriegelungselement 41 ist mittels eines elastischen Elementes in Form einer Zugfeder 46, die mit einem Ende 46a an dem primären Verriegelungselement 41 und mit dem anderen Ende 46b an dem Träger 400 angreift, derart elastisch vorgespannt, dass es die Tendenz hat, den Verriegelungsbolzen 45 freizugeben. Dem wirkt jedoch das sekundäre Verriegelungselement 42 entgegen, das mit einer Anschlagsfläche 42b gegen eine zugeordnete Anschlagsfläche 41 b des primären Verriegelungselementes 41 drückt und daher eine Bewegung des primären Verriegelungselementes unter der Wirkung des elastischen Elementes 46 verhindert. Das sekundäre Element 42 ist hierzu mittels eines zugehörigen elastischen Elementes 47 in Form einer Zugfeder, die mit einem Ende 47a am sekundären Verriegelungselement 42 und mit dem anderen Ende 47b an dem Träger 400 angreift, in eine Lage vorgespannt, in der es eine Freigabe des Verriegelungsbolzens 45 unter der Wirkung des dem primären Verriegelungselement 41 zugeordneten elastischen Elementes 46 verhindert. Die Federkraft der beiden durch Zugfedern gebildeten elastischen Elemente 46, 47, die am primären bzw. sekundären Verriegelungselement 41 bzw. 42 angreifen, sind demnach derart aufeinander abgestimmt, dass das von der dem sekundären Verriegelungselement 42 zugeordneten Zugfeder 47 erzeugte Drehmoment so groß ist, dass es von der dem primären Verriegelungselement 41 zugeordneten Zugfeder 46 nicht überwunden werden kann. Hierbei spielen neben den Federkonstanten der Zugfedern 46, 47 auch die entsprechenden Hebelarme des primären Verriegelungselementes 41 und des sekundären Verriegelungselementes 42 eine Rolle, sowie der Exzenterwinkel zwischen den Anschlagsflächen 41b und 42b, welcher sich im Bereich der Selbsthemmung befindet.

Zur Begrenzung der Schwenkbewegung, die das sekundäre Verriegelungselement 42 unter der Wirkung der zugeordneten Zugfeder 47 ausführen kann, dient ein Anschlag 48, der mit einem Oberflächenabschnitt des sekundären Verriegelungselementes 42 zusammenwirkt und hierdurch im verriegelten Zustand der Verriegelungseinrichtung 4 die Einnahme einer definierten Position des sekundären Verriegelungselementes 42 unter der Wirkung der zugeordneten Zugfeder 46 sicherstellt.

Die dem sekundären Verriegelungselement 42 zugeordnete Zugfeder 47 ist zudem derart Dimensioniert, dass auch starke Querbeschleunigungen (Massenkräfte in einem Crash-Fall) nicht zu einem Öffnen des Verriegelungsmechanismus 4 entgegen der Wirkung der Zugfeder 47 führen.

Dem sekundären Verriegelungselement 42 ist ferner ein um eine Achse 60 schwenkbar gelagerter Steuerhebel 6 mit einem als Anschlag dienenden Eingriffselement 69 in Form einer Verriegelungsnase zugeordnet, die mit einer Einbuchtung 49 des sekundären Verriegelungselementes 42 in Eingriff bringbar ist. Hierzu ist der Steuerhebel 6 mittels eines elastischen Elementes in Form einer Zugfeder 65 in Richtung auf eine Position elastisch vorgespannt, in der dessen Verriegelungsnase 69 in die zugeordnete Einbuchtung 49 des sekundären Verriegelungselementes 42 eingriffe. Dies wird jedoch in der der Figur 5a zugrunde gelegten Gebrauchsposition der Kopfstützenanordnung durch ein an der Grundplatte 20 des Kopfstützenträgers 2 (vergleiche Figur 1 a) festgelegtes Sicherungselement in Form eines Bolzens 63 verhindert, der an einem zugeordneten Anschlag 61 des Steuerhebels 6 anliegt und dadurch ein Verschwenken des Steuerhebels, das zu einem Eingriff mit dem sekundären Verriegelungselement 42 führen würde, verhindert.

Zur Entriegelung des Verriegelungsmechanismus 4 in einem Crash-Fall ist diesem ein Entriegelungsmechanismus 7 zugeordnet, der einen als Zugmagneten ausgebildeten Elektromagneten 70 umfasst, welcher über seinen in einer Zugrichtung Z längsbeweglichen Magnetkern 71 und eine durch einen Gelenkbolzen 71a gelenkig hiermit verbundene Zugstange 72 mit dem sekundären Verriegelungselement 42 gekoppelt ist, indem ein an dem sekundären Verriegelungselement 42 vorgesehener Bolzen 42a in ein Langloch 73 der Zugstange 72 eingreift. Auf der Zugstange 72 ist eine Spielausgleichsfeder 75 gelagert, die sich einerseits an dem Gehäuse des Elektromagneten 70 und andererseits an dem sekundären Verriegelungselement 42 abstützt und hierdurch Klappergeräusche verhindert.

Unter der Wirkung der dem sekundären Verriegelungselement 42 zugeordneten Zugfeder 47 ist der über die Zugstange 72 mit dem sekundären Verriegelungselement 42 verbundene Magnetkern 71 aus dem Gehäuse des Elektromagneten 70 herausgezogen, und zwar um einen Weg, der durch den dem sekundären Verriegelungselement 42 zugeordneten Anschlagsbolzen 48 begrenzt ist.

Zusammenfassend zeigt Figur 5a den Verriegelungsmechanismus einer Kopfstützenanordnung bei in Gebrauchsposition befindlicher Kopfstütze und im verriegelten Zustand, d. h. in einem Zustand, in dem die Verriegelungseinrichtung 4 eine Verschiebung der Kopfstütze aus der Gebrauchsposition heraus verhindert.

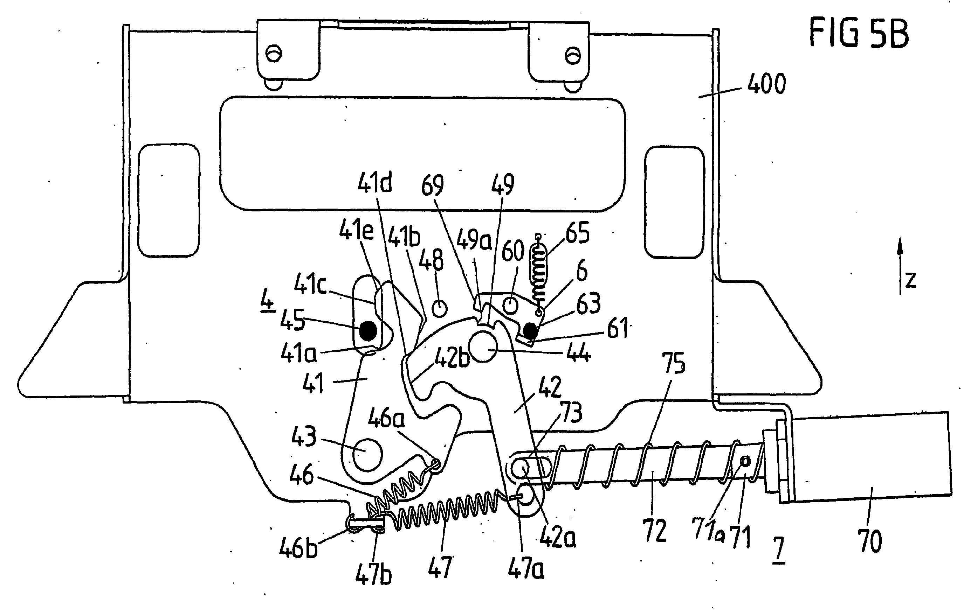

Bei einer starken Fahrzeugverzögerung, insbesondere einem Crash-Fall, der durch einen hierfür vorgesehenen Sensor, insbesondere einem Beschleunigungssensor, detektiert wird, wird der Elektromagnet 70 bestromt und dieser zieht entgegen der Wirkung der dem sekundären Verriegelungselement 42 zugeordneten Zugfeder 47 den Magnetkern 71 in das Gehäuse des Elektromagneten 70 bis zu einem gehäusefesten Anschlag hinein, vergleiche Figur 5b. Hierdurch wird das sekundäre Verriegelungselement 42 derart um seine Schwenkachse 44 verschwenkt, dass dessen Anschlagsfläche 42b nicht mehr an der zugeordneten Anschlagsfläche 41 b des primären Verriegelungselementes 41 anliegt, wobei der mit der Anschlagfläche 42b versehene Abschnitt des sekundären Verriegelungselementes 42 in eine entsprechend groß gestaltete Ausnehmung des primären Verriegelungselementes 41 gerät. Dieses verschwenkt daher unter der Wirkung der zugeordneten Zugfeder 46 derart, dass die Verriegelungsklaue 41a des primären Verriegelungselementes 41 den kopfstützenfesten Verriegelungsbolzen 45 freigibt. Damit sind die Voraussetzungen für eine Bewegung der Kopfstütze aus ihrer Gebrauchsposition heraus in einem Crash-Fall geschaffen, wie sie weiter oben anhand der Figuren 1a bis 4 beispielhaft für eine Schwenkbewegung beschrieben worden ist.

In dem in Figur 5b gezeigten Zustand der Verriegelungseinrichtung 4 ist jedoch eine solche Bewegung der Kopfstütze noch nicht erfolgt; vielmehr befindet sich die Kopfstütze bei entriegelter Verriegelungseinrichtung 4 nach wie vor in ihrer in Figur 5a dargestellten Gebrauchsposition.

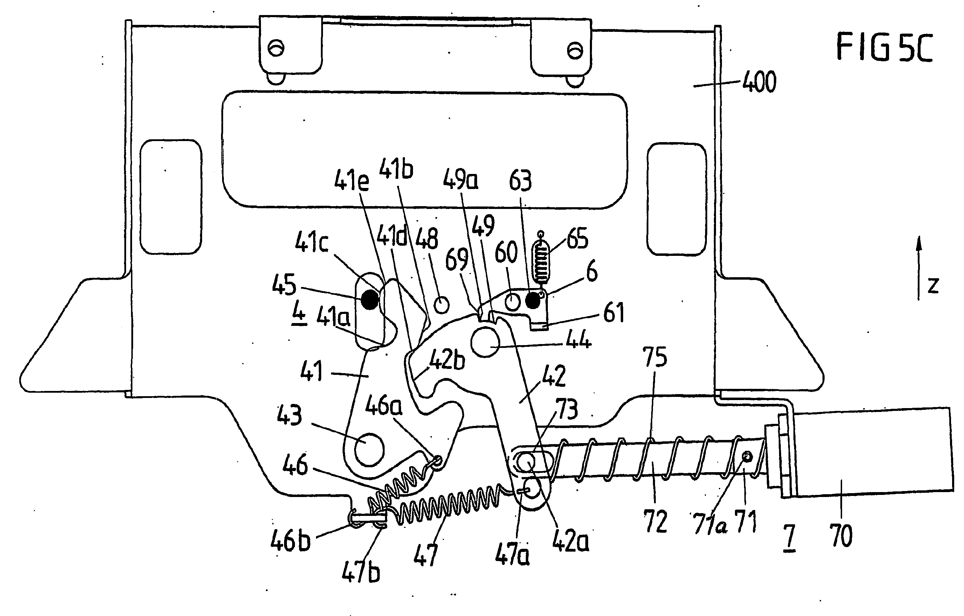

Figur 5c zeigt die Verriegelungseinrichtung 4 am Beginn einer Bewegung der Kopfstütze 4 entlang der vertikalen Fahrzeugachse z nach oben und gegebenenfalls zusätzlich nach vorne (entsprechend einer Schwenkbewegung). Es ist erkennbar, dass der Verriegelungsbolzen 45 entlang einer abgeschrägten Fläche der Verriegelungsklaue 41a des primären Verriegelungselementes 41 aus dieser herausgeglitten ist und nun als Betätigungselement auf einen an die Verriegelungsklaue 41a anschließenden Abschnitt 41 c des primären Verriegelungselementes 41 einwirkt. Dies führt zu einem zusätzlichen Verschwenken des primären Verriegelungselementes 41 (in dergleichen Richtung wie das durch die zugeordnete Zugfeder 46 ausgelöste Verschwenken) und zu einer Einwirkung des primären Verriegelungselementes 41 auf das sekundäre Verriegelungselement 42 mittels einer hierfür vorgesehenen Erhebung 41 d des primären Verriegelungselementes 41. Dies bewirkt wiederum ein zusätzliches Verschwenken des sekundären Verriegelungselementes 42 entgegen der Wirkung der zugeordneten Zugfeder 47, wobei der am sekundären Verriegelungselement 42 vorgesehene Bolzen 42a in dem Langloch 73 der Zugstange 72 verschoben wird (da der Magnetkern am gehäusefesten Anschlag anliegt) und die am sekundären Verriegelungselement 42 vorgesehene Einbuchtung 49 in eine Position gebracht wird, in der die Verriegelungsnase 69 des (durch Aufwärtsverlagerung des als Sicherungselement dienenden Bolzens 63 freigegebenen) Steuerhebels 6 in diese eingreifen kann. Zur Erleichterung des Einführens der Verriegelungsnase 69 in die Einbuchtung 49 ist dabei die Verriegelungsnase 69 geringfügig von dem zugeordneten seitlichen Anschlag 49a der Einbuchtung 49 beabstandet.

Der an die Verriegelungsklaue 41a anschließende Abschnitt 41c des primären Verriegelungselementes 41 weist eine solche Länge auf, dass bei einer crash-bedingten Verlagerung der Kopfstütze der kopfstützenseitige Verriegelungsbolzen 45 lange genug entlang dieses Abschnittes gleitet, um einen Eingriff der Verriegelungsnase 69 des Steuerhebels 6 in die zugeordnete Einbuchtung 49 zu gestatten, vergleiche Figur 5c.

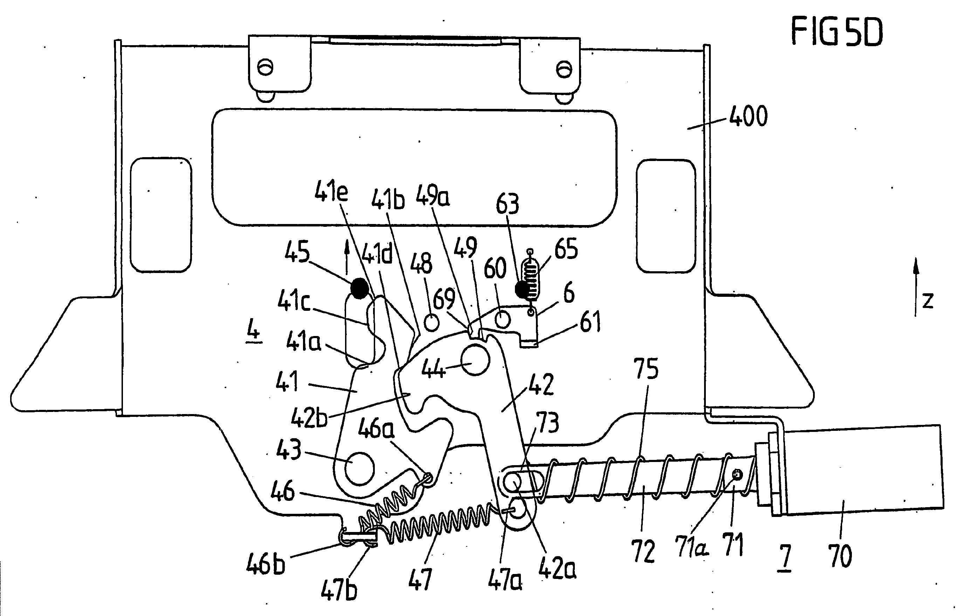

Bei der in Figur 5d gezeigten weiteren Verlagerung der Kopfstütze aus ihrer Gebrauchsposition heraus gerät der Verriegelungsbolzen 45 wieder außer Eingriff mit dem an die Verriegelungsklaue 41a anschließenden Abschnitt 41c des primären Verriegelungselementes 41, so dass dieses unter der Winkung der dem sekundären Verriegelungselement 42 zugeordneten Zugfeder 47 wiederum geringfügig entgegen dem von der eigenen Zugfeder 46 erzeugten Moment verschwenkt wird, bis die Verriegelungsnase 69 des Steuerhebels 6 an dem zugeordneten seitlichen Anschlag 49a der Einbuchtung 49 am primären Verriegelungselement 41 anliegt. Hierdurch nehmen das primäre Verriegelungselement 41 und das sekundäre Verriegelungselement 42 unter der Wirkung der zugeordneten Zugfedern 46, 47 sowie aufgrund des Zusammenwirkens der Verriegelungsnase 69 mit dem Anschlag 49a der Einbuchtung 49 des primären Verriegelungselementes 41 eine definierte Position ein, in der die Verriegelungseinrichtung 4 entriegelt ist. D.h., die Verriegelungseinrichtung 4 befindet sich fortdauernd in einem Zustand, in dem der Verriegelungsbolzen 45 aus der Verriegelungsklaue 41a des primären Verriegelungselementes 41 herausgeführt werden könnte, vergleiche Figur 5d.

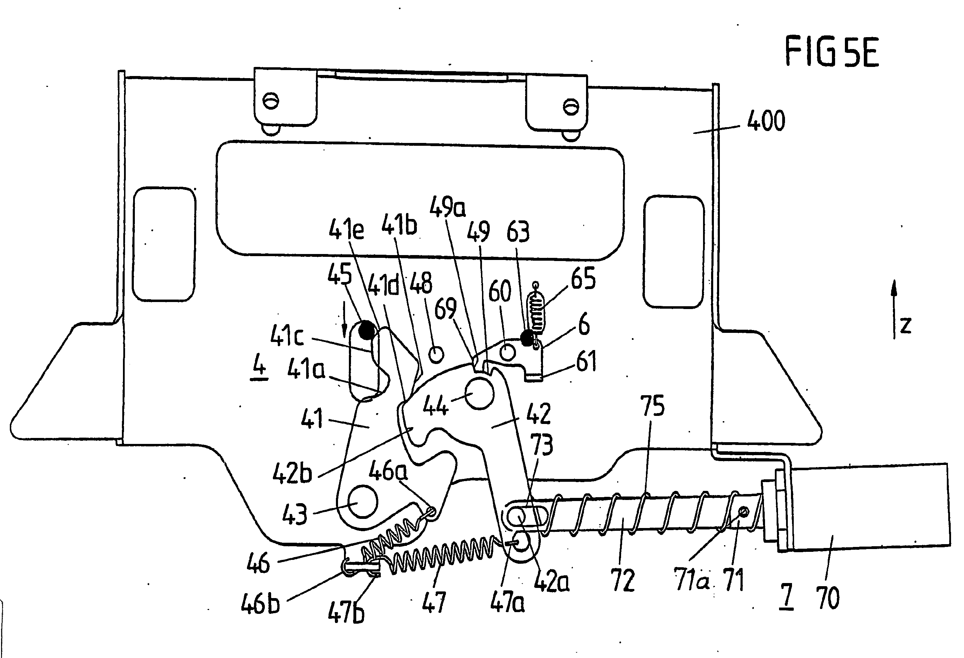

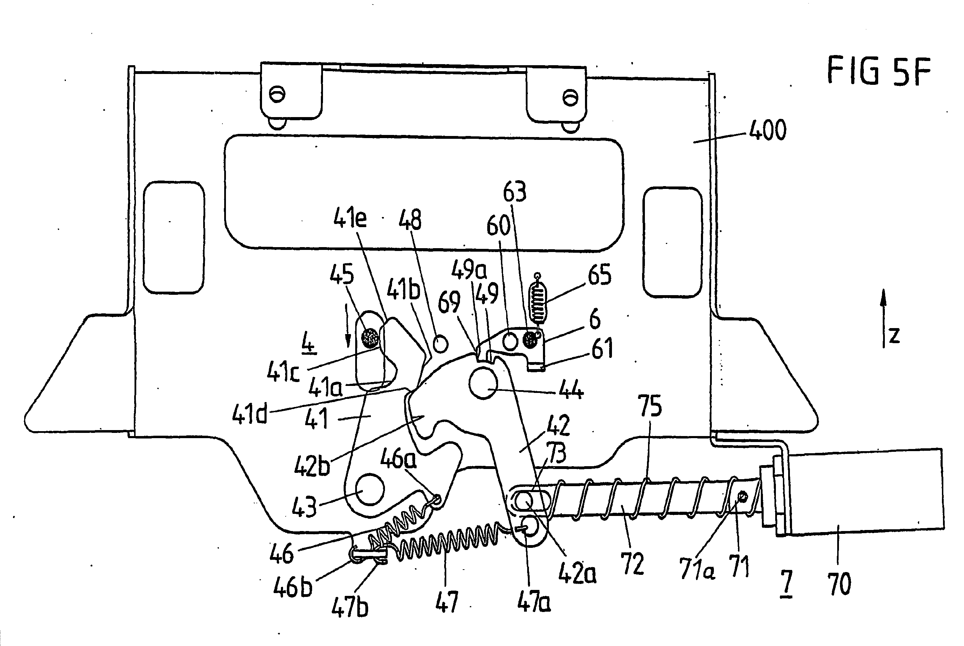

Dies hat den wichtigen Vorteil, dass im Anschluss an eine crash-bedingte Verlagerung der Kopfstütze, wie sie anhand der Figuren 1a bis 4 beispielhaft dargestellt worden ist, wieder in eine Gebrauchsposition zurückgeführt werden kann, wobei die Verriegelungseinrichtung 4 erneut verriegelt wird, wie nachfolgend anhand der Figuren 5e und 5f beschrieben werden wird.

Figur 5e zeigt die Verriegelungseinrichtung 4 bei einem Zurückschieben der Kopfstütze aus ihrer crash-bedingt verlagerten Position heraus zurück in die Gebrauchsposition, die vor dem Crash-Fall vorgelegen hatte und in der der Kopfstützenkörper zum Abstützen des Kopfes eines Fahrzeuginsassen im Normalbetrieb eines Kraftfahrzeugs dient. Hierbei gerät der kopfstützenfeste Verriegelungsbolzen 45 schließlich in Eingriff mit einer zugeordneten Schräge 41e des primären Verriegelungselementes 41, entlang der er zu dem an die Verriegelungsklaue 41a anschließenden Abschnitt 41c des primären Verriegelungselementes 41 geführt wird, vergleiche Figuren 5e und 5f.

Sobald der Verriegelungsbolzen 45 beim Zurückschieben der Kopfstütze den an die Verriegelungsklaue 41 a anschließenden Abschnitt 41 c erreicht hat, erfolgt wiederum eine geringe zusätzliche Schwenkbewegung des primären Verriegelungselementes 41 im Uhrzeigersinn, wie bereits anhand Figur 5c beschrieben, wobei die Verriegelungsnase 69 des Steuerhebels 6 mit dem zugeordneten seitlichen Anschlag 49a der Einbuchtung 49 des primären Verriegelungshebels 41 außer Eingriff gebracht wird. Hierbei wird wiederum der am sekundären Verriegelungselement 42 vorgesehene Bolzen 42a im zugeordneten Langloch 73 der Zugstange 72 bewegt.

Die zusätzliche, geringfügige Auslenkung des sekundären Verriegelungselementes 42 unter Einwirkung einer entsprechenden Erhebung 41d des primären Verriegelungselementes 41 entgegen der Vorspannkraft der dem sekundären Verriegelungselement 42 zugeordneten Zugfeder 47 wird insbesondere dadurch ermöglicht, dass die Erhebung 41d mit einem entsprechend großen Hebelarm (bezogen auf die Schwenkachse 43 des primären Verriegelungselementes 41) auf das sekundäre Verriegelungselement 42 einwirkt.

Im Ergebnis kann nun die Verriegelungsnase 69 des Steuerhebels 6 durch Verschwenken des Steuerhebels 6 um seine Schwenkachse 60 aus der Einbuchtung des sekundären Verriegelungselementes 42 ausgehoben werden, sobald bei einem weiteren Zurückschieben der Kopfstütze in ihre Gebrauchsposition (über den in Figur 5f gezeigten Zustand hinaus) der kopfstützenseitige Anschlagsbolzen 63 auf den zugeordneten Anschlag 61 des Steuerhebels 6 auftrifft und diesen entgegen der Wirkung der zugeordneten Zugfeder 65 auslenkt, entsprechend der in Figur 5a gezeigten Ausgangsstellung.

Gleichzeitig gleitet der kopfstützenseitige Verriegelungsbolzen 45 bei der weiteren Zurückverlagerung der Kopfstütze wieder in den Bereich der Verriegelungsklaue 41 a des primären Verriegelungselementes 41 und dieses wird unter der Wirkung des (durch die Verriegelungsnase 69 nicht mehr gehinderten) sekundären Verriegelungselementes 42 derart verschwenkt, dass die Verriegelungsklaue 41a den Verriegelungsbolzen 45 umgreift, wie in der Ausgangsposition gemäß Figur 5a dargestellt. Die zugrundeliegende Schwenkbewegung des sekundären Verriegelungselementes 42, die über die einander zugeordneten Anschlagsflächen 42b, 41 b auf das primäre Verriegelungselement 41 übertragen wird, wird ausgelöst durch die dem sekundären Verriegelungselement 42 zugeordnete Zugfeder 47. Hierbei wird der Magnetkern 71 des nun nicht mehr bestromten Elektromagneten 70 wieder aus dem Gehäuse des Elektromagneten 70 herausgezogen, zurück in die in Figur 5a dargestellte Ausgangslage. (Die Bestromung des Elektromagneten 70 endet, sobald der Elektromagnet 70 in einem Crash-Fall seine Funktion erfüllt hat, nämlich das Entriegeln der Verriegelungsvorrichtung 4 durch Einwirkung auf das sekundäre Verriegelungselement 42, das ja sodann durch den Steuerhebel 6 in einer definierten entriegelten Lage gehalten wird. Der Elektromagnet wird dann nicht mehr weiter bestromt, so dass er beim Zurückschieben der Kopfstütze der erneuten Einnahme des Ausgangszustandes der Verriegelungseinrichtung 4, wie in Figur 5a dargestellt, nicht entgegensteht.)

Im Ergebnis ist schließlich die Kopfstütze mittels des Verriegelungsmechanismus 4 wieder in ihrer in Figur 5a gezeigten Gebrauchsposition verriegelt. Dies wurde dadurch ermöglicht, dass der Verriegelungsmechanismus 4 während der Vorverlagerung der Kopfstütze dauerhaft in einer entriegelten Position gehalten wurde, die ein Rückführen der Kopfstütze in ihre Gebrauchsposition zulässt. Die Einnahme eines solchen entriegelten Zustandes nach Betätigung des Entriegelungsmechanismus 7 erfolgte insbesondere unter der Wirkung der dem primären Verriegelungselement 41 zugeordneten Zugfeder 46 sowie dem Zusammenwirken des Verriegelungsbolzens 45 mit dem der Verriegelungsklaue 41a nachgeordneten Abschnitt 41c des primären Verriegelungselementes 41. Fixiert und arretiert wird dieser definierte Entriegelungszustand durch den Eingriff der Verriegelungsnase 69 des Steuerhebels 6 in eine Einbuchtung 49 des sekundären Verriegelungselementes 42, wobei die Verriegelungsnase 69 unter der Einwirkung der Zugfeder 47 des sekundären Verriegelungselementes 42 an einem Anschlag 49a der Einbuchtung 49 anliegt.

Figur 6 zeigt eine Abwandlung des Verriegelungsmechanismus aus Figur 5a, wobei der wesentliche Unterschied darin besteht, dass der Elektromagnet 70' des Entriegelungsmechanismus 7 als Druckmagnet und nicht als Zugmagnet ausgebildet ist. Dementsprechend wirkt die an den in Druckrichtung D verschieblichen Magnetkern 71 anschließende Stange 72 als Druckstange auf das sekundäre Verriegelungselement 42 ein, um diesen zur Entriegelung des Verriegelungsmechanismus 4 auszulenken.

Die Druckstange 72 ist in diesem Fall unmittelbar (und nicht über ein Langloch) an dem hierfür vorgesehenen Bolzen 41 a des primären Verriegelungselementes 41 angelenkt. Eine Langlochführung ist in diesem Fall nicht erforderlich, da die Druckstange 72 nach dem Entriegeln des Verriegelungsmechanismus 4 (aufgrund einer Bestromung des Druckmagneten 70' und einer entsprechenden Bewegung des Magnetkerns 71 aus dem Gehäuse des Druckmagneten 70' heraus) im stromlosen Zustand noch passiv bewegbar ist, um eine zusätzliche geringfügige Schwenkbewegung des sekundären Verriegelungselementes 42 zum Einrasten der Verriegelungsnase 69 in die Einbuchtung 49 des primären Verriegelungselementes 41 zuzulassen. Die mögliche passive Bewegung des Magnetkerns 71 aus dem Gehäuse des Druckmagneten 70' hinaus wird begrenzt durch einen dem sekundären Verriegelungselement 42 zugeordneten Anschlag 48'.

Der bei dem in Figur 5a dargestellten Ausführungsbeispiel vorgesehene Anschlag 48 zur Begrenzung der Schwenkbewegung des sekundären Verriegelungselementes 42, der zwischen dem primären Verriegelungselement 41 und dem Steuerhebel 6 vorgesehen ist, entfällt in diesem Fall, da eine Schwenkbewegung des sekundären Verriegelungselementes 42 im Uhrzeigersinn vorliegend dadurch begrenzt ist, dass sich die Druckstange 72 mittels des Magnetkerns 71 nur bis zu einem gehäusefesten Anschlag in das Gehäuse des Druckmagneten 70' hineinziehen lässt. Hierdurch ist die mögliche Schwenkbewegung des sekundären Verriegelungselementes 42 im Uhrzeigersinn bereits begrenzt.

## Patentansprüche

1. Kopfstützenanordnung für einen Kraftfahrzeugsitz mit - einem Lehnengestell (5) für eine Rückenlehne,
- einer am Lehnengestell (5) in mindestens einer Gebrauchsposition festlegbaren Kopfstütze (1), die einen Kopfstützenkörper (10) zum Abstützen des Kopfes eines Fahrzeuginsassen aufweist,
- eine Einrichtung zur Verlagerung der Kopfstütze in einem Crash-Fall, um den Kopfstützenkörper bezüglich des Lehnengestells in eine vorgebbare, von der Gebrauchsposition verschiedene Position zu bewegen und
- einer Verriegelungseinrichtung (4), die einer Verlagerung der Kopfstütze entgegenwirkt und die in einem Crash-Fall entriegelbar ist,
**gekennzeichnet durch**
eine Vorrichtung (6, 46, 47, 49) zum Arretieren der Verriegelungseinrichtung (4) in dem entriegelten Zustand, solange die Kopfstütze aus der Gebrauchsposition heraus verlagert ist.

2. Kopfstützenanordnung nach Anspruch 1, **dadurch gekennzeichnet, dass** die Verriegelungseinrichtung (4) mittels mindestens eines ersten elastischen Elementes (47) in Richtung auf den verriegelten Zustand vorgespannt ist.

3. Kopfstützenanordnung nach Anspruch 1 oder 2, **dadurch gekennzeichnet, dass** der Verriegelungseinrichtung (4) mindestens ein zweites elastisches Element (46) zugeordnet ist, mit dem die Verriegelungseinrichtung (4) in Richtung auf den entriegelten Zustand beaufschlagt ist.

4. Kopfstützenanordnung nach Anspruch 1 oder 2, **dadurch gekennzeichnet, dass** die Kopfstütze in der mindestens einen Gebrauchsposition unter der Wirkung des ersten elastischen Elementes (47) und entgegen der Wirkung des zweiten elastischen Elementes (46) verriegelt ist.

5. Kopfstützenanordnung nach Anspruch 3 oder 4, **dadurch gekennzeichnet, dass** die Verriegelungseinrichtung (4) mittels des zweiten elastischen Elementes (46) in den entriegelten Zustand bringbar ist.

6. Kopfstützenanordnung nach einem der vorhergehenden Ansprüche, **dadurch gekennzeichnet, dass** mindestens ein Anschlag (69) vorgesehen ist, der bei entriegelter Verriegelungseinrichtung (4) auf ein Bauteil (42) der Verriegelungseinrichtung (4) einwirkt, so dass die Verriegelungseinrichtung (4) in einem durch das Zusammenwirken des Anschlages (69) mit dem Bauteil (42) definierten Zustand gehalten wird.

7. Kopfstützenanordnung nach Anspruch 6, **dadurch gekennzeichnet, dass** der Anschlag durch ein Eingriffselement (69) gebildet wird, das mit dem Bauteil (42) der Verriegelungseinrichtung (4) in Eingriff bringbar ist, und zwar vorzugsweise durch formschlüssigen Eingriff.

8. Kopfstützenanordnung nach Anspruch 6 oder 7, **dadurch gekennzeichnet, dass** der Anschlag (69) bei der Verlagerung der Kopfstütze in eine Position bringbar ist, in der er auf das Bauteil (42) der Verriegelungseinrichtung (4) einwirkt.

9. Kopfstützenanordnung nach Anspruch 8, **dadurch gekennzeichnet, dass** der Anschlag (69) durch Verschwenken in die Position bringbar ist, in der er auf das Bauteil (42) der Verriegelungseinrichtung (4) einwirkt.

10. Kopfstützenanordnung nach Anspruch 8 oder 9, **dadurch gekennzeichnet, dass** der Anschlag (69) bei verriegelter Verriegelungseinrichtung (4) in einer Position gehalten wird, in der er nicht auf die Verriegelungseinrichtung (4) einwirkt, und dass der Anschlag (69) bei einer Verlagerung der Kopfstütze freigegeben wird, so dass er auf die Verriegelungseinrichtung (4) einwirken kann.

11. Kopfstützenanordnung nach Anspruch 10, **gekennzeichnet durch** ein bei der Verlagerung der Kopfstütze bewegbares Sicherungselement (63), welches bei der Verlagerung der Kopfstütze den Anschlag (69) freigibt.

12. Kopfstützenanordnung nach einem der Ansprüche 6 bis 11, **dadurch gekennzeichnet, dass** der Anschlag (69) in Richtung auf die Position vorgespannt ist, in der er auf die Verriegelungseinrichtung (4) einwirkt.

13. Kopfstützenanordnung nach einem der Ansprüche 7 bis 12, **dadurch gekennzeichnet, dass** das Bauteil (42) der Verstelleinrichtung (4) bei der Verlagerung der Kopfstütze in eine Position gebracht wird, in der das Eingriffselement (69) in das Bauteil (42) eingreifen kann.

14. Kopfstützenanordnung nach Anspruch 13, **dadurch gekennzeichnet, dass** das Bauteil (42) der Verriegelungseinrichtung (4) bei der Verlagerung der Kopfstütze durch ein bei Verlagerung der Kopfstütze bewegbares Betätigungselement (45) in die Position bringbar ist, in der das Eingriffselement (69) in das Bauteil (42) eingreifen kann.

15. Kopfstützenanordnung nach einem der vorhergehenden Ansprüche, **dadurch gekennzeichnet, dass** die Verriegelungseinrichtung (4) am Lehnengestell angeordnet ist.

16. Kopfstützenanordnung nach einem der vorhergehenden Ansprüche, **dadurch gekennzeichnet, dass** die Verriegelungseinrichtung (4) ein primäres Verriegelungselement (41) aufweist, das im verriegelten Zustand der Verriegelungseinrichtung (4) derart mit einem Halteelement (45) der Kopfstütze zusammenwirkt, dass die Kopfstütze nicht bewegbar ist, und das derart betätigbar ist, dass es das Haltelement (45) freigibt.

17. Kopfstützenanordnung nach Anspruch 16, **dadurch gekennzeichnet, dass** das Halteelement (45) bei der Verlagerung der Kopfstütze relativ zu dem primären Verriegelungselement (41) bewegbar ist, nachdem das primäre Verriegelungselement (41) zur Entriegelung der Verriegelungseinrichtung (4) betätigt worden ist.

18. Kopfstützenanordnung nach Anspruch 16 oder 17, **dadurch gekennzeichnet, dass** das primäre Verriegelungselement (41) eine Verriegelungsklaue (41a) aufweist, die im verriegelten Zustand der Verriegelungseinrichtung (4) das Halteelement (45) übergreift.

19. Verriegelungseinrichtung nach einem der Ansprüche 16 bis 18, **dadurch gekennzeichnet, dass** das primäre Verriegelungselement (41) durch eine schwenkbar gelagerte Sperrklinke gebildet wird.

20. Kopfstützenanordnung nach Anspruch 3 und einem der Ansprüche 16 bis 19, **dadurch gekennzeichnet, dass** das primäre Verriegelungselement (41) mittels eines elastischen Elementes (46) in Richtung auf den entriegelten Zustand vorgespannt ist.

21. Kopfstützenanordnung nach Anspruch 13 und einem der Ansprüche 16 bis 20, **dadurch gekennzeichnet, dass** das Bauteil (42) der Verriegelungseinrichtung (4) durch Einwirkung des Betätigungselementes (45) auf das primäre Verriegelungselement (41) in eine Position gebracht wird, in der das Eingriffselement (69) in das Bauteil (42) eingreifen kann.

22. Kopfstützenanordnung nach Anspruch 21, **dadurch gekennzeichnet, dass** das Betätigungselement (45) durch das Halteelement (45) gebildet wird.

23. Kopfstützenanordnung nach einem der Ansprüche 16 bis 22, **gekennzeichnet durch** ein sekundäres Verriegelungselement (42), mit dem das primäre Verriegelungselement (41) in einer Position gehalten werden kann, in der die Verriegelungseinrichtung (4) verriegelt ist, und das zur Entriegelung der Verriegelungseinrichtung (4) betätigbar ist, so dass es das primäre Verriegelungselement freigibt.

24. Kopfstützenanordnung nach Anspruch 23, **dadurch gekennzeichnet, dass** das sekundäre Verriegelungselement (42) durch einen Verriegelungshebel gebildet wird.

25. Kopfstützenanordnung nach Anspruch 2 und Anspruch 23 oder 24, **dadurch gekennzeichnet, dass** das sekundäre Verriegelungselement (42) in Richtung auf den Zustand elastisch vorgespannt ist, in dem es das primäre Verriegelungselement (41) in einer Position hält, in der die Verriegelungseinrichtung (4) verriegelt ist.

26. Kopfstützenanordnung nach Anspruch 20 und 25, **dadurch gekennzeichnet, dass** die elastische Vorspannung des primären Verriegelungselementes (41) einerseits und des sekundären Verriegelungselementes (42) andererseits derart aufeinander abgestimmt ist, dass das sekundäre Verriegelungselement (42) das primäre Verriegelungselement (41) in einer Position hält, die dem verriegelten Zustand entspricht, wenn das sekundäre Verriegelungselement (42) nicht zur Entriegelung der Verriegelungseinrichtung (4) betätigt worden ist.

27. Kopfstützenanordnung nach Anspruch 6 und einem der Ansprüche 23 bis 26, **dadurch gekennzeichnet, dass** das Bauteil (42) der Verriegelungseinrichtung (4) durch das sekundäre Verriegelungselement gebildet wird.

28. Kopfstützenanordnung nach Anspruch 6 und einem der Ansprüche 23 bis 27, **dadurch gekennzeichnet, dass** der Anschlag (69) auf das sekundäre Verriegelungselement (42) einwirkt.

29. Kopfstützenanordnung nach einem der vorhergehenden Ansprüche, **dadurch gekennzeichnet, dass** ein Entriegelungsmechanismus (7) zur Entriegelung der Verstelleinrichtung (4) in einem Crashfall vorgesehen ist, um eine Verlagerung der Kopfstütze zu ermöglichen.

30. Kopfstützenanordnung nach Anspruch 29, **dadurch gekennzeichnet, dass** der Entriegelungsmechanismus (7) sensorgesteuert, insbesondere mittels eines Beschleunigungs- oder Annäherungssensors, auslösbar ist.

31. Kopfstützenanordnung nach Anspruch 29 oder 30, **dadurch gekennzeichnet, dass** der Entriegelungsmechanismus (7) elektrisch und/oder mechanisch aktivierbar ist.

32. Kopfstützenanordnung nach Anspruch 31, **dadurch gekennzeichnet, dass** der Entriegelungsmechanismus (7) mittels eines Elektromagneten (70, 70') betätigbar ist.

33. Kopfstützenanordnung nach einem Ansprüche 28 bis 32, **dadurch gekennzeichnet, dass** der Entriegelungsmechanismus (7) zur Einwirkung auf die Verriegelungseinrichtung (4) ein Zug- oder ein Schubmittel (72) aufweist, das mit der Verriegelungseinrichtung (4) gekoppelt ist.

34. Kopfstützenanordnung nach Anspruch 23 und einem der Ansprüche 28 bis 33, **dadurch gekennzeichnet, dass** der Entriegelungsmechanismus (7) mit dem sekundären Verriegelungselement (42) gekoppelt ist.

35. Kopfstützenanordnung nach einem der vorhergehenden Ansprüche, **dadurch gekennzeichnet, dass** die Vorrichtung (6, 46, 47, 49) zum Arretieren der Verriegelungseinrichtung (4) im entriegelten Zustand durch Zurückbewegen der Kopfstütze aus einer verlagerten Position in ihre Gebrauchsposition deaktivierbar ist.

36. Kopfstützenanordnung nach Anspruch 35, **dadurch gekennzeichnet, dass** die Vorrichtung (6, 46, 47) zum Arretieren der Verriegelungseinrichtung (4) im entriegelten Zustand beim Zurückbewegen der Kopfstütze in ihre Gebrauchsposition automatisch deaktivierbar ist.

37. Kopfstützenanordnung nach Anspruch 11 und 36, **dadurch gekennzeichnet, dass** die Deaktivierung durch Einwirkung des Sicherungselementes (63) auf die Verriegelungseinrichtung (4) erfolgt.

38. Kopfstützenanordnung nach Anspruch 14 und 37, **dadurch gekennzeichnet, dass** das Betätigungselement (45) auf die Verriegelungseinrichtung (4) einwirkt, damit das Eingriffselement (69) außer Eingriff mit dem Bauteil (42) der Verriegelungseinrichtung (4) bringbar ist.

39. Kopfstützenanordnung nach Anspruch 2 und Anspruch 37 oder 38, **dadurch gekennzeichnet, dass** durch Einwirkung des Sicherungselementes (63) auf das Eingriffselement (69) die Verriegelungseinrichtung (4) unter der Vorspannung des ersten elastischen Elementes (47) in den verriegelten Zustand bringbar ist.

## Claims

1. Headrest arrangement for a motor vehicle seat comprising
- a backrest frame (5) for a backrest,
- a headrest (1) which may be secured to the backrest frame (5) in at least one position of use, which comprises a headrest body (10) for supporting the head of a vehicle occupant,
- a device for displacing the headrest in the event of a crash, in order to move the headrest body relative to the backrest frame into a predeterminable position which is different from the position of use and
- a locking device (4) which counteracts a displacement of the headrest and which may be unlocked in the event of a crash,
**characterized by**
a device (6, 46, 47, 49) for blocking the locking device (4) in the unlocked state, provided that the headrest is displaced from the position of use.

2. Headrest arrangement according to Claim 1, **characterized in that** the locking device (4) is pretensioned towards the locked state by means of at least one first resilient element (47).

3. Headrest arrangement according to Claim 1 or 2, **characterized in that** at least one second resilient element (46) is associated with the locking device (4), by which the locking device (4) may be acted upon towards the unlocked state.

4. Headrest arrangement according to Claim 1 or 2, **characterized in that** the headrest is locked in the at least one position of use by the action of the first resilient element (47) and counter to the action of the second resilient element (46).

5. Headrest arrangement according to Claim 3 or 4, **characterized in that** the locking device (4) may be moved by means of the second resilient element (46) into the unlocked state.

6. Headrest arrangement according to one of the preceding claims, **characterized in that** at least one stop (69) is provided which, when the locking device (4) is unlocked, acts on a component (42) of the locking device (4), so that the locking device (4) is held in a state defined by the cooperation of the stop (69) with the component (42).

7. Headrest arrangement according to Claim 6, **characterized in that** the stop is formed by an engagement element (69) which may be brought into engagement with the component (42) of the locking device (4), and namely preferably by positive engagement.

8. Headrest arrangement according to Claim 6 or 7, **characterized in that** the stop (69) may be moved, during the displacement of the headrest, into a position in which it acts on the component (42) of the locking device (4).

9. Headrest arrangement according to Claim 8, **characterized in that** the stop (69) may be moved by pivoting into the position in which it acts on the component (42) of the locking device (4).

10. Headrest arrangement according to Claim 8 or 9, **characterized in that**, when the locking device (4) is locked, the stop (69) is retained in a position in which it does not act on the locking device (4) and **in that**, during a displacement of the headrest, the stop (69) is released so that it may act on the locking device (4).

11. Headrest arrangement according to Claim 10, **characterized by** a safety element (63) which is movable during the displacement of the headrest and which releases the stop (69) during the displacement of the headrest.

12. Headrest arrangement according to one of Claims 6 to 11, **characterized in that** the stop (69) is pretensioned towards the position in which it acts on the locking device (4).

13. Headrest arrangement according to one of Claims 7 to 12, **characterized in that**, during the displacement of the headrest, the component (42) of the adjusting device (4) is moved into a position in which the engagement element (69) may engage in the component (42).

14. Headrest arrangement according to Claim 13, **characterized in that**, during the displacement of the headrest, the component (42) of the locking device (4) may be moved by an actuating element (45) which is movable, during the displacement of the headrest, into the position in which the engagement element (69) may engage in the component (42).

15. Headrest arrangement according to one of the preceding claims, **characterized in that** the locking device (4) is arranged on the backrest frame.

16. Headrest arrangement according to one of the preceding claims, **characterized in that** the locking device (4) has a primary locking element (41) which, in the locked state of the locking device (4), cooperates with a retaining element (45) of the headrest such that the headrest may not be moved and which is able to be actuated such that it releases the retaining element (45).

17. Headrest arrangement according to Claim 16, **characterized in that**, during the displacement of the headrest, the retaining element (45) may be moved relative to the primary locking element (41), after the primary locking element (41) has been actuated for unlocking the locking device (4).

18. Headrest arrangement according to Claim 16 or 17, **characterized in that** the primary locking element (41) has a locking claw (41a) which in the locked state of the locking device (4) engages over the retaining element (45).

19. Locking device according to one of Claims 16 to 18, **characterized in that** the primary locking element (41) is formed by a pivotably mounted locking pawl.

20. Headrest arrangement according to Claim 3 and one of Claims 16 to 19, **characterized in that** the primary locking element (41) is pretensioned by means of a resilient element (46) towards the unlocked state.

21. Headrest arrangement according to Claim 13 and one of Claims 16 to 20, **characterized in that** the component (42) of the locking device (4) is moved by the action of the actuating element (45) on the primary locking element (41) into a position in which the engagement element (69) may engage in the component (42).

22. Headrest arrangement according to Claim 21, **characterized in that** the actuating element (45) is formed by the retaining element (45).

23. Headrest arrangement according to one of Claims 16 to 22, **characterized by** a secondary locking element (42) by which the primary locking element (41) may be retained in a position in which the locking device (4) is locked and which may be actuated for unlocking the locking device (4), so that it releases the primary locking element.

24. Headrest arrangement according to Claim 23, **characterized in that** the secondary locking element (42) is formed by a locking lever.

25. Headrest arrangement according to Claim 2 and Claim 23 or 24, **characterized in that** the secondary locking element (42) is resiliently pretensioned towards the state in which it retains the primary locking element (41) in a position in which the locking device (4) is locked.

26. Headrest arrangement according to Claim 20 and 25, **characterized in that** the resilient pretensioning of the primary locking element (41), on the one hand, and of the secondary locking element (42), on the other hand, are adjusted relative to one another such that the secondary locking element (42) retains the primary locking element (41) in a position which corresponds to the locked state when the secondary locking element (42) has not been actuated for unlocking the locking device (4).

27. Headrest arrangement according to Claim 6 and one of Claims 23 to 26, **characterized in that** the component (42) of the locking device (4) is formed by the secondary locking element.

28. Headrest arrangement according to Claim 6 and one of Claims 23 to 27, **characterized in that** the stop (69) acts on the secondary locking element (42).

29. Headrest arrangement according to one of the preceding claims, **characterized in that** an unlocking mechanism (7) is provided for unlocking the adjusting device (4) in the event of a crash, in order to permit a displacement of the headrest.

30. Headrest arrangement according to Claim 29, **characterized in that** the unlocking mechanism (7) may be triggered in a sensor-controlled manner, in particular by means of an acceleration sensor or proximity sensor.

31. Headrest arrangement according to Claim 29 or 30, **characterized in that** the unlocking mechanism (7) may be activated electrically and/or mechanically.

32. Headrest arrangement according to Claim 31, **characterized in that** the unlocking mechanism (7) may be actuated by means of an electromagnet (70, 70').

33. Headrest arrangement according to one of Claims 28 to 32, **characterized in that** the unlocking mechanism (7) has a pulling or pushing means (72) for acting on the locking device (4) and which is coupled to the locking device (4).

34. Headrest arrangement according to Claim 23 and one of Claims 28 to 33, **characterized in that** the unlocking mechanism (7) is coupled to the secondary locking element (42).

35. Headrest arrangement according to one of the preceding claims, **characterized in that** the device (6, 46, 47, 49) for blocking the locking device (4) in the unlocked state may be deactivated by moving the headrest from a displaced position back into its position of use.

36. Headrest arrangement according to Claim 35, **characterized in that** the device (6, 46, 47) for blocking the locking device (4) in the unlocked state may be automatically deactivated when moving the headrest back into its position of use.

37. Headrest arrangement according to Claim 11 and 36, **characterized in that** the deactivation takes place by the action of the safety element (63) on the locking device (4).

38. Headrest arrangement according to Claim 14 and 37, **characterized in that** the actuating element (45) acts on the locking device (4), so that the engagement element (69) may be moved out of engagement with the component (42) of the locking device (4).

39. Headrest arrangement according to Claim 2 and Claim 37 or 38, **characterized in that**, by the action of the safety element (63) on the engagement element (69), the locking element (4) may be moved into the locked state by the pretensioning of the first resilient element (47).

## Revendications

1. Agencement d'appui-tête pour un siège de véhicule automobile, comportant
- un bâti de dossier (5) pour un dossier,
- un appui-tête (1) susceptible d'être fixé au bâti de dossier (5) dans au moins une position d'utilisation, qui présente un corps d'appui-tête (10) pour soutenir la tête d'un passager du véhicule,
un dispositif pour déplacer l'appui-tête en cas de collision pour amener le corps d'appui-tête par rapport au bâti de dossier dans une position prédéterminable qui diffère de la position d'utilisation, et
- un dispositif de verrouillage (4) qui s'oppose à un déplacement de l'appui-tête et qui peut être déverrouillé en cas de collision,
**caractérisé par**
un dispositif (6, 46, 47, 49) destiné à bloquer le dispositif de verrouillage (4) à l'état déverrouillé tant que l'appui-tête est déplacé hors de la position d'utilisation.

2. Agencement d'appui-tête selon la revendication 1, **caractérisé en ce que** le dispositif de verrouillage (4) est précontraint au moyen d'au moins un premier élément élastique (47) en direction de l'état verrouillé.

3. Agencement d'appui-tête selon la revendication 1 ou 2, **caractérisé en ce qu'**au dispositif de verrouillage (4) est associé au moins un deuxième élément élastique (46) par lequel le dispositif de verrouillage (4) est sollicité en direction de l'état déverrouillé.

4. Agencement d'appui-tête selon la revendication 1 ou 2, **caractérisé en ce que** l'appui-tête est verrouillé dans ladite au moins une position d'utilisation sous l'effet du premier élément élastique (47) et à l'encontre de l'effet du deuxième élément élastique (46).

5. Agencement d'appui-tête selon la revendication 3 ou 4, **caractérisé en ce que** le dispositif de verrouillage (4) peut être amené à l'état déverrouillé au moyen du deuxième élément élastique (46).

6. Agencement d'appui-tête selon l'une quelconque des revendications précédentes, **caractérisé en ce qu'**il est prévu au moins une butée (69) qui agit sur un composant (42) du dispositif de verrouillage (4) lorsque le dispositif de verrouillage (4) est déverrouillé, de telle sorte que le dispositif de verrouillage (4) est maintenu dans un état défini par la coopération entre la butée (69) et le composant (42).

7. Agencement d'appui-tête selon la revendication 6, **caractérisé en ce que** la butée est formée par un élément d'engagement (69) qui peut être amené en engagement avec le composant (42) du dispositif de verrouillage (4), et plus précisément de préférence par engagement par coopération de formes.

8. Agencement d'appui-tête selon la revendication 6 ou 7, **caractérisé en ce que** lors du déplacement de l'appui-tête, la butée (69) peut être amenée dans une position dans laquelle elle agit sur le composant (42) du dispositif de verrouillage (4).

9. Agencement d'appui-tête selon la revendication 8, **caractérisé en ce que** la butée (69) peut être amenée par pivotement dans la position dans laquelle elle agit sur le composant (42) du dispositif de verrouillage (4).

10. Agencement d'appui-tête selon la revendication 8 ou 9, **caractérisé en ce que** lorsque le dispositif de verrouillage (4) est verrouillé, la butée (69) est maintenue dans une position dans laquelle elle n'agit pas sur le dispositif de verrouillage (4), et **en ce que** la butée (69) est libérée lorsque l'appui-tête est déplacé, de telle sorte qu'elle peut agir sur le dispositif de verrouillage (4)

11. Agencement d'appui-tête selon la revendication 10, **caractérisé par** un élément de sécurité (63) déplaçable lors du déplacement de l'appui-tête, qui libère la butée (69) lors du déplacement de l'appui-tête.

12. Agencement d'appui-tête selon l'une des revendications 6 à 11, **caractérisé en ce que** la butée (69) est précontrainte en direction de la position dans laquelle elle agit sur le dispositif de verrouillage (4).

13. Agencement d'appui-tête selon l'une des revendications 7 à 12, **caractérisé en ce que** le composant (42) du dispositif de verrouillage (4) est amené lors du déplacement de l'appui-tête dans une position dans laquelle l'élément d'engagement (69) peut s'engager dans le composant (42).

14. Agencement d'appui-tête selon la revendication 13, **caractérisé en ce que** lorsque l'appui-tête est déplacé, le composant (42) du dispositif de verrouillage (4) peut être amené par un élément d'actionnement (45) déplaçable lors du déplacement de l'appui-tête dans la position dans laquelle l'élément d'engagement (69) peut s'engager dans le composant (42).

15. Agencement d'appui-tête selon l'une quelconque des revendications précédentes, **caractérisé en ce que** le dispositif de verrouillage (4) est agencé sur le bâti de dossier.

16. Agencement d'appui-tête selon l'une quelconque des revendications précédentes, **caractérisé en ce que** le dispositif de verrouillage (4) présente un élément de verrouillage (41) primaire qui, à l'état verrouillé du dispositif de verrouillage (4), coopère avec un élément de retenue (45) de l'appui-tête de telle sorte que l'appui-tête ne peut pas se déplacer et peut être actionné de telle sorte qu'il libère l'élément de retenue (45).

17. Agencement d'appui-tête selon la revendication 16, **caractérisé en ce que** lors du déplacement de l'appui-tête, l'élément de retenue (45) peut se déplacer par rapport à l'élément de verrouillage (41) primaire après que l'élément de verrouillage (41) primaire ait été actionné pour déverrouiller le dispositif de verrouillage (4).

18. Agencement d'appui-tête selon la revendication 16 ou 17, **caractérisé en ce que** l'élément de verrouillage (41) primaire présente une mâchoire de verrouillage (41a) qui, à l'état verrouillé du dispositif de verrouillage (4), coiffe l'élément de retenue (45).

19. Dispositif de verrouillage selon l'une des revendications 16 à 18, **caractérisé en ce que** l'élément de verrouillage (41) primaire est formé par un cliquet d'arrêt monté pivotant.

20. Agencement d'appui-tête selon la revendication 3 et selon l'une des revendications 16 à 19, **caractérisé en ce que** l'élément de verrouillage (41) primaire est précontraint au moyen d'un élément élastique (46) en direction de l'état déverrouillé.

21. Agencement d'appui-tête selon la revendication 13 et selon l'une des revendications 16 à 20, **caractérisé en ce que** le composant (42) du dispositif de verrouillage (4) est amené par l'effet de l'élément d'actionnement (45) sur l'élément de verrouillage (41) primaire dans une position dans laquelle l'élément d'engagement (69) peut s'engager dans le composant (42).

22. Agencement d'appui-tête selon la revendication 21, **caractérisé en ce que** l'élément d'actionnement (45) est formé par l'élément de retenue (45).

23. Agencement d'appui-tête selon l'une des revendications 16 à 22, **caractérisé par** un élément de verrouillage (42) secondaire par lequel l'élément de verrouillage (41) primaire peut être maintenu dans une position dans laquelle le dispositif de verrouillage (4) est verrouillé, et qui peut être actionné pour déverrouiller le dispositif de verrouillage (4), de telle sorte qu'il libère l'élément de verrouillage primaire.

24. Agencement d'appui-tête selon la revendication 23, **caractérisé en ce que** l'élément de verrouillage (42) secondaire est formé par un levier de verrouillage.

25. Agencement d'appui-tête selon la revendication 2 et selon la revendication 23 ou 24, **caractérisé en ce que** l'élément de verrouillage (42) secondaire est précontraint élastiquement en direction de l'état dans lequel il maintient l'élément de verrouillage (41) primaire dans une position dans laquelle le dispositif de verrouillage (4) est verrouillé.

26. Agencement d'appui-tête selon la revendication 20 et 25, **caractérisé en ce que** la précontrainte élastique de l'élément de verrouillage (41) primaire d'une part et la précontrainte élastique de l'élément de verrouillage (42) secondaire d'autre part sont adaptées l'une à l'autre de telle sorte que l'élément de verrouillage (42) secondaire maintient l'élément de verrouillage (41) primaire dans une position qui correspond à l'état verrouillé lorsque l'élément de verrouillage (42) secondaire n'a pas été actionné pour déverrouiller le dispositif de verrouillage (4).

27. Agencement d'appui-tête selon la revendication 6 et selon l'une des revendications 23 à 26, **caractérisé en ce que** le composant (42) du dispositif de verrouillage (4) est formé par l'élément de verrouillage secondaire.

28. Agencement d'appui-tête selon la revendication 6 et selon l'une des revendications 23 à 27, **caractérisé en ce que** la butée (69) agit sur l'élément de verrouillage (42) secondaire.

29. Agencement d'appui-tête selon l'une quelconque des revendications précédentes, **caractérisé en ce qu'**il est prévu un mécanisme de déverrouillage (7) pour déverrouiller le dispositif de verrouillage (4) en cas de collision pour permettre un déplacement de l'appui-tête.

30. Agencement d'appui-tête selon la revendication 29, **caractérisé en ce que** le mécanisme de déverrouillage (7) est susceptible d'être déclenché sous la commande d'un capteur, et en particulier d'un capteur d'accélération ou d'un capteur de proximité.

31. Agencement d'appui-tête selon la revendication 29 ou 30, **caractérisé en ce que** le mécanisme de déverrouillage (7) peut être activé électriquement et/ou mécaniquement.

32. Agencement d'appui-tête selon la revendication 31, **caractérisé en ce que** le mécanisme de déverrouillage (7) peut être actionné au moyen d'un électroaimant (70, 70').

33. Agencement d'appui-tête selon l'une des revendications 28 à 32, **caractérisé en ce que** pour agir sur le dispositif de verrouillage (4), le mécanisme de déverrouillage (7) présente un moyen de traction ou de poussée (72) qui est couplé au dispositif de verrouillage (4).

34. Agencement d'appui-tête selon la revendication 23 et selon l'une des revendications 28 à 33, **caractérisé en ce que** le mécanisme de déverrouillage (7) est couplé à l'élément de verrouillage (42) secondaire.

35. Agencement d'appui-tête selon l'une quelconque des revendications précédentes, **caractérisé en ce que** le dispositif (6, 46, 47, 49) pour bloquer le dispositif de verrouillage (4) dans l'état déverrouillé peut être désactivé en ramenant l'appui-tête depuis une position déplacée jusque dans sa position d'utilisation.

36. Agencement d'appui-tête selon la revendication 35, **caractérisé en ce que** le dispositif (6, 46, 47, 49) pour bloquer le dispositif de verrouillage (4) dans l'état déverrouillé peut être désactivé automatiquement lorsque l'appui-tête est ramené dans sa position d'utilisation.

37. Agencement d'appui-tête selon la revendication 11 et 36, **caractérisé en ce que** la désactivation a lieu par intervention de l'élément de sécurité (63) sur le dispositif de verrouillage (4).

38. Agencement d'appui-tête selon la revendication 14 et 37, **caractérisé en ce que** l'élément d'actionnement (45) agit sur le dispositif de verrouillage (4) afin que l'élément d'engagement (69) puisse être amené hors d'engagement d'avec le composant (42) du dispositif de verrouillage (4).

39. Agencement d'appui-tête selon la revendication 2 et selon la revendication 37 ou 38, **caractérisé en ce que** par l'intervention de l'élément de sécurité (63) sur l'élément d'engagement (69), le dispositif de verrouillage (4) peut être amené dans l'état verrouillé sous la précontrainte du premier élément élastique (47).
